(19) **Europäisches Patentamt**
**European Patent Office**
**Office européen des brevets**

(11) **EP 1 473 215 B1**

(12) # EUROPEAN PATENT SPECIFICATION

(45) Date of publication and mention
of the grant of the patent:
**15.06.2011 Bulletin 2011/24**

(51) Int Cl.:
***B62J 6/00*** *(2006.01)*     ***B62J 6/02*** *(2006.01)*
***B62J 6/04*** *(2006.01)*

(21) Application number: **02788647.2**

(22) Date of filing: **26.11.2002**

(86) International application number:
**PCT/JP2002/012300**

(87) International publication number:
**WO 2003/066419 (14.08.2003 Gazette 2003/33)**

(54) **LAMP SYSTEM FOR MOTORCYCLES**

LAMPENSYSTEM FÜR MOTORRÄDER

SYSTEME DE LAMPES POUR MOTOCYCLES

(84) Designated Contracting States:
**DE ES FR GB IT**

(30) Priority: **05.02.2002 JP 2002027870**
**10.10.2002 JP 2002298077**

(43) Date of publication of application:
**03.11.2004 Bulletin 2004/45**

(73) Proprietor: **HONDA GIKEN KOGYO KABUSHIKI KAISHA**
**Minato-ku,**
**Tokyo 107-8556 (JP)**

(72) Inventors:
• **MATSUMOTO, Yoshiyuki,**
**c/o Honda R&D Co., Ltd.**
**Wako-shi,**
**Saitama 351-0193 (JP)**
• **TSUTSUMI, Youjirou,**
**c/o Honda R&D Co., Ltd.**
**Wako-shi,**
**Saitama 351-0193 (JP)**
• **ABE, Masaaki,**
**c/o Honda R&D Co., Ltd.**
**Wako-shi,**
**Saitama 351-0193 (JP)**
• **MARUYAMA, Kazuyuki,**
**c/o Honda R&D Co., Ltd.**
**Wako-shi,**
**Saitama 351-0193 (JP)**
• **UEMATSU, Isao,**
**c/o Honda R&D Co., Ltd.**
**Wako-shi,**
**Saitama 351-0193 (JP)**

(74) Representative: **Herzog, Markus et al**
**Weickmann & Weickmann**
**Patentanwälte**
**Postfach 86 08 20**
**81635 München (DE)**

(56) References cited:
DE-C- 713 939      DE-C- 728 262
JP-A- 4 118 329      JP-A- 2001 253 379
JP-U- 6 039 691      JP-U- 50 051 580
JP-U- 52 046 450      JP-U- 52 046 451
JP-U- 57 154 539      US-A- 4 741 598
US-A- 5 457 612

• **PATENT ABSTRACTS OF JAPAN vol. 016, no. 370 (M-1292), 10 August 1992 (1992-08-10) & JP 04 118329 A (TOSHIBA LIGHTING & TECHNOL CORP; others: 01), 20 April 1992 (1992-04-20)**

**Description**

Technical Field

This invention relates to a lamp system for a two-wheeled vehicle, and particularly to technology for increasing the visibility of a two-wheeler, and specifically to a lamp system for a two-wheeler for increasing the perception accuracy of the sense of the speed or sense of the distance of a two-wheeler.

Background Art

Because two-wheeled vehicles are smaller in apparent size compared to four-wheeled vehicles, judging their distance is difficult compared to four-wheeled vehicles. Particularly at night, the driver and the vehicle other than its lights are difficult to see, there are few clues for sensing distance, and improving the accuracy with which distance is perceived is difficult, and for example a two-wheeler which is close may be perceived to be far away.

Also, because two-wheeled vehicles are smaller in apparent size compared to four-wheeled vehicles, judging their speed is difficult compared to four-wheeled vehicles. Particularly at night, the driver and the vehicle other than its lights are difficult to see, there are few clues for sensing speed, and improving the accuracy with which speed is perceived is difficult, and for example a two-wheeler approaching at a high speed may be perceived to be at a lower speed.

To prevent these kinds of phenomena, technology has been proposed wherein wireless communication between the two-wheeler and other transport means are used, and information on present position and speed and so on is exchanged to increase the accuracy of perception of distance and speed.

Technology for keeping visibility from other vehicles good without using communication means has been disclosed (for example JP-A-6-227314). According to this, in a scooter having a scooter proper, a front fender mounted on the forward direction front face of this scooter proper, and leg shields fixed to front parts of both side faces of the scooter proper extending downward from both side end faces of the front fender, position lamps are mounted on the front fender sides of the leg shields.

Also, technology for increasing visibility from other vehicles without using wireless communication and for widening the area of illumination around the own vehicle has been disclosed (for example JP-A-6-344826). According to this, in an automotive two-wheeler having an automotive two-wheeler proper, a front leg shield mounted at front side parts of the automotive two-wheeler proper and covering the top of the front wheel, a first side leg shield extending from one width direction end of the front leg shield toward the rear wheel, and a second side leg shield extending from the other width direction end of the front leg shield toward the rear wheel, position lamps are provided integrally with respective front side parts of the first side leg shield and the second side leg shield, with their lamp faces pointing in the forward direction of the automotive two-wheeler body.

A visibility lamp device of a two-wheeler has been disclosed according to the preamble of claim 1, (for example JP-A-2001-334976) which is a lamp device visible from the front to be switched on at daytime, wherein a pair of lamps which emit blue or green color type light are mounted above and below or to the left and right of each other, and the center distance between the two lamps is at least 50mm.

However, in the technology using communication means, its cost is high, and unless all two-wheeled vehicles and four-wheeled vehicles are equipped with communication means it is difficult to increase the accuracy of perception of distance and speed. In the technology using position lamps without using communication means, there is no disclosure relating to the optimal positioning of the position lamps. Also, there is no quantitative comparison of different lamp/reflector colors, and no optimum lamp/reflector color is disclosed.

It is an object of the invention to solve the foregoing problems and provide a lamp/reflector disposition with which it is possible to increase the accuracy of perception of distance and speed by a simpler method.

JP 04 118329 A shows a front light 1 mounted near the front axle of a two wheel vehicle, but no other front or rear light.

US-A-5 457 612 refers to rear lights of the bicycle only, which the first set of rear lights 20 mounted below the saddle, and a second set of rear lights 40 mounted on the rear stay near the axle of the rear wheel.

DE 728 262 C, DE 713 939 C and US 4 741 598 only show rear lights near the rear wheel axle of a bicycle or motorcycle, similar to the lower rear light 40 of US-A-5 457 612.

JP06-39691 A shows a front light of a bicycle combined with an additional light device fastened at a spoke of the front wheel.

Disclosure of the Invention

This invention provides a lighting or lamp system of a two-wheeler having a plurality of lamps, in accordance with claim 1. At least one lamp of the lamp system of the two-wheeler is disposed on a straight line passing through the axle center of the front wheel and parallel with the ground surface, or below the straight line, and on a vertical line dropping to the ground surface from the rearmost part of the front wheel, or forward of the vertical line.

With this first lamp system of a two-wheeler, it becomes easier for others to perceive its distance. And because lamps disposed low are conspicuous, its visibility improves. And because lamps are disposed low, it becomes easy for the rider to understand the surrounding situation.

In the invention, because lamps are disposed at the front, it becomes easier for others to perceive the speed and distance of the two-wheeler. Light from lamps can be directed in the direction of advance at all times, and by this means the directed light can be made to follow the front wheel, whose direction is changed by steering of the handlebars. Also, because lamps are mounted at the front, light from lamps is directed in the direction of advance at all times, and by this means others can more easily be made aware of the intentions of the rider. And because lamps are mounted at the front, compared to a case wherein lamps are mounted on leg shields, the degree to which light from the lamps is blocked by the front wheel is reduced.

Also, in the invention, because lamps are disposed low and at the front, the area immediately in front of the two-wheeler is illuminated by the lamps and as a result it becomes easier to see obstructions immediately in front of the two-wheeler and the state of the road. And because lamps are disposed low and at the front, they can increase the apparent size of the two-wheeler. Also, because lamps are in low positions, even in thick fog they illuminate low areas where the fog is relatively thin, and as a result of this, visibility in thick fog is increased.

In the invention, the plurality of lamps include at least one headlight and a plurality of other lamps, and at least one of those other lamps is of the same color type as the headlight. Because a lamp is of the same color type as the headlight like this and the lamp of the same color type as the headlight is disposed low, it becomes easier for others to sense the distance of the two-wheeler. And because lamps disposed low of the same color type as the headlight are conspicuous, visibility increases. Also, because lamps of the same color type as the headlight are disposed low, it becomes easier for the rider to see the surrounding situation well.

And because lamps of the same color type as the headlight are disposed at the front, it becomes easier for others to sense the distance and speed of the two-wheeler. Light from lamps of the same color type as the headlight can be directed in the direction of advance at all times, and by this means the directed light can be made to follow the front wheel, whose direction is changed by steering of the handlebars. Also, because lamps of the same color type as the headlight are mounted at the front, light from lamps of the same color type as the headlight is directed in the direction of advance at all times, and by this means others can be more easily made aware of the intentions of the rider. And because lamps of the same color type as the headlight are mounted at the front, compared to a case wherein lamps of the same color type as the headlight are mounted on leg shields, the degree to which light from the lamps of the same color type as the headlight is blocked by the front wheel is reduced.

Also, in the invention, because lamps of the same color type as the headlight are disposed low and at the front, the area immediately in front of the two-wheeler is illuminated by the lamps of the same color type as the headlight, and as a result it becomes easier to see obstructions immediately in front of the two-wheeler and the state of the road. And because lamps of the same color type as the headlight are disposed low and at the front, they can increase the apparent size of the two-wheeler. Also, because lamps of the same color type as the headlight are in low positions, even in thick fog they illuminate low areas where the fog is relatively thin, and as a result of this, visibility in thick fog is increased.

As a result of lamps of the same color type as the headlight being provided, the two-wheeler is more easily recognized as a single body, and others can sense its distance and speed more easily.

In the invention, preferably, the plurality of lamps include a headlight and a plurality of other lamps, and preferably, at least one of the other lamps is disposed above the height of the headlight. That is, because there is at least one other lamp above the height of the headlight of the two-wheeler, as a result of a height difference being provided between the upper and lower lamps, it becomes easier for others to sense the speed of the two-wheeler. And because lamps are provided above the height of the headlight, they are conspicuous, and consequently the visibility of the two-wheeler increases. Also, because light from lamps disposed like this illuminates the surroundings, it becomes easier for the rider to understand the surrounding situation.

Since lamps are provided above the height of the headlight of the two-wheeler the height difference between the lamps and the line of sight of the driver of a truck with its seat in a high position compared to a two-wheeler is small, the visibility of the two-wheeler to truck drivers can be increased. Also, because the height difference between the lamps and the line of sight of the driver of a four-wheeled vehicle is small, the visibility of the two-wheeler to drivers of four-wheeled vehicles increases, and the two-wheeler is more easily seen in rear mirrors of four-wheeled vehicles. And because lamps are provided above the height of the headlight of the two-wheeler, the lamps disposed in a tall arrangement make the two-wheeler clearly look tall, and consequently it is easier for others to recognize the two-wheeler as such. And, this lamp system can increase the apparent size of the two-wheeler.

The plurality of lamps of the invention include a headlight and a plurality of other lamps, and preferably at least one of those other lamps is disposed above the height of the headlight and is of the same color type as the headlight. That is, because there is at least one other lamp of the same color type as the headlight above the height of the headlight of the two-wheeler, as a result of a height difference being provided between the upper and lower lamps, it becomes easier for others to sense the speed of the two-wheeler. And because lamps of the same color type as the headlight are provided above the height of the headlight, they are conspicuous, and consequently the visibility of the two-wheeler increases. Also, because light from lamps of the same color type as the headlight disposed like this illuminates the surroundings, it becomes easier for the rider to understand the surrounding situation.

Because lamps of the same color type as the headlight are provided above the height of the headlight of the two-wheeler, the height difference between the lamps of the same color type as the headlight and the line of sight of the driver of a truck with its seat in a high position compared to a two-wheeler is small, the visibility of the two-wheeler to truck drivers can be increased. Also, because the height difference between the lamps of the same color type as the headlight and the line of sight of the driver of a four-wheeled vehicle is small, the visibility of the two-wheeler to drivers of four-wheeled vehicles increases, and the two-wheeler is more easily seen in rear mirrors of four-wheeled vehicles. And because lamps of the same color type as the headlight are provided above the height of the headlight of the two-wheeler, the lamps disposed in a tall arrangement make the two-wheeler clearly look tall, and consequently it is easier for others to recognize the two-wheeler as such. And, these lamps of the same color type as the headlight can increase the apparent size of the two-wheeler.

As a result of lamps of the same color type as the headlight being provided, the two-wheeler is more easily recognized as a single body, and others can more easily sense its speed.

In the invention, the height difference between the highest lamp and the lowest lamp of the two-wheeler lamp system is preferably at least 50% of the overall height of the two-wheeler. When the height difference between the highest lamp and the lowest lamp of the two-wheeler lamp system is made at least 50% of the overall height of the two-wheeler like this, it becomes easier for others to sense the speed of the two-wheeler. And because the disposed lamps are conspicuous, visibility improves. And because light from lamps disposed like this illuminates the surroundings, it becomes easier for the rider to understand the surrounding situation.

Since the height difference between the highest lamp and the lowest lamp of the two-wheeler lamp system is at least 50% of the overall height of the two-wheeler, the height difference between the lamps and the line of sight of the driver of a truck with its seat in a high position compared to a two-wheeler is small, the visibility of the two-wheeler to truck drivers can be increased. Also, because the height difference between the lamps and the line of sight of the driver of a four-wheeled vehicle is small, the visibility of the two-wheeler to drivers of four-wheeled vehicles increases, and the two-wheeler is more easily seen in rear mirrors of four-wheeled vehicles. And because the height difference between the highest lamp and the lowest lamp of the two-wheeler lamp system is at least 50% of the overall height of the two-wheeler, the lamps disposed in a tall arrangement make the two-wheeler clearly look tall, and consequently it is easier for others to recognize the two-wheeler as such. And, this lamp system can increase the apparent size of the two-wheeler.

Also, the invention provides a lamp system of a two-wheeler having a plurality of lamps in accordance with claim 5. At least one lamp of the lamp system of the two-wheeler is disposed on a straight line passing through the axle center of the rear wheel and parallel with the ground surface, or below the straight line, and on a vertical line dropping to the ground surface from the frontmost part of the rear wheel, or rearward of the vertical line. Accordingly, it is easier for others to sense the distance of the two-wheeler. And because lamps disposed low are conspicuous, the visibility of the two-wheeler increases. And because lamps are disposed low, the rider can understand the surrounding situation. And because lamps are disposed at the rear, it becomes easier for others to sense the inter-vehicle distance and relative speed. Also, as a result of these being combined with lamps at the front of the two-wheeler, the overall length of the two-wheeler is easily sensed. And because lamps are disposed at the rear, the apparent size of the two-wheeler as seen from the rear can be increased. Also, because lamps are disposed at the rear and low, even in thick fog they illuminate low areas where the fog is relatively thin, and as a result of this, visibility in thick fog is increased.

In the invention, preferably, the plurality of lamps include a brake light and a plurality of other lamps, and at least one of the other lamps is disposed above the height of the brake light. That is, because there is at least one other lamp above the height of the brake light of the two-wheeler, as a result of a height difference being provided between the upper and lower lamps, it becomes easier for others to sense the speed of the two-wheeler. Because lamps are provided above the height of the brake light, they are conspicuous, and consequently the visibility of the two-wheeler increases. Also, because light from lamps disposed like this illuminates the surroundings, it becomes easier for the rider to understand the surrounding situation.

Because lamps are provided above the height of the brake light of the two-wheeler, the height difference between the lamps and the line of sight of the driver of a truck with its seat in a high position compared to a two-wheeler is small, the visibility of the two-wheeler to truck drivers can be increased. Also, because the height difference between the lamps and the line of sight of the driver of a four-wheeled vehicle is small, the visibility of the two-wheeler to drivers of four-wheeled vehicles increases. Because lamps are provided above the height of the brake light of the two-wheeler, the lamps disposed in a tall arrangement make the two-wheeler clearly look tall, and consequently it is easier for others to recognize the two-wheeler as such. This lamp system can increase the apparent size of the two-wheeler.

Brief Description of the Drawings

Fig. 1 is a view showing positions in which lamps are disposed on a two-wheeler, and is a side view of a two-wheeler with front and rear tires of the same size;

Fig. 2 is a view showing positions in which lamps are disposed on a two-wheeler, and is a front view of a two-wheeler with front and rear tires of the same size;

Fig. 3 is a view showing positions in which lamps are disposed on a two-wheeler, and is a rear view of a two-wheeler with front and rear tires of the same size;

Fig. 4 is a view showing positions in which lamps are disposed on a two-wheeler, and is a side view of a two-wheeler with front and rear tires of different sizes;

Fig. 5 is a side view showing a lamp system of a two-wheeler according to a first embodiment of the invention;

Fig. 6 is a front view of a lamp system of a two-wheeler according to a first embodiment of the invention;

Fig. 7 is a view showing lamp system of a two-wheeler of another kind;

Fig. 8 is a schematic view of the front wheel part of a two-wheeler;

Fig. 9 is a schematic view of a front wheel part showing another example of a lamp system according to the first embodiment;

Fig. 10 is a schematic view of a front wheel part showing a further example of a lamp system according to the first embodiment;

Fig. 11 is a side view showing a lamp system of a two-wheeler according to a third embodiment of the invention;

Fig. 12 is a side view showing a lamp system of a two-wheeler according to the third embodiment of the invention;

Fig. 13 is a schematic view showing an apparatus used for an experiment;

Fig. 14 is a view showing an ordinary two-wheeler used in the experiment, (a) being a front view and (b) a side view;

Fig. 15 is a view showing a two-wheeler having a lamp system of the invention used in the experiment, (a) being a front view and (b) a side view;

Fig. 16 is a view showing another two-wheeler having a lamp system of the invention used in the experiment, (a) being a front view and (b) a side view;

Fig. 17 is an image showing an ordinary two-wheeler traveling at 60Km/h and distance 80m and a two-wheeler having a lamp system of the invention traveling at 60Km/h and distance 50m;

Fig. 18 is an image showing an ordinary two-wheeler traveling at 60Km/h and distance 80m and a two-wheeler having a lamp system of the invention traveling at 60Km/h and distance 80m;

Fig. 19 is an image showing an ordinary two-wheeler traveling at 60Km/h and distance 80m and a two-wheeler having a lamp system of the invention traveling at 60Km/h and distance 110m;

Fig. 20 is a graph showing perceived distances of the two-wheelers when the experiment was carried out by multiple observers observing multiple moving pictures;

Fig. 21 is a graph showing the proportion with respect to an ordinary two-wheeler (NORMAL) of the perceived distance of a two-wheeler to which a measure of the invention was applied (LOW);

Fig. 22 is a view showing a CIE1976 UCS chromaticity chart (XYZ color specification), illustrating a definition of same color type;

Fig. 23 is a view showing a CIE1976 UCS chromaticity chart ($X_{10}Y_{10}Z_{10}$ color specification), illustrating a definition of same color type;

Fig. 24 is a view showing a CIE1976 UCS chromaticity chart (XYZ color specification), illustrating a color used in an experiment;

Fig. 25 is a graph showing the perceived distances of respective two-wheelers when an experiment was carried out by multiple observers observing multiple moving pictures;

Fig. 26 is a graph showing the proportions with respect to an ordinary two-wheeler (NORMAL) of the perceived distances of two-wheelers to which a measure of the invention was applied (LOW white), (LOW blue), (LOW green);

Fig. 27 is a side view showing a lamp system of a two-wheeler according to a fourth embodiment of the invention;

Fig. 28 is a front view showing a lamp system of a two-wheeler according to the fourth embodiment of the invention;

Fig. 29 is a view showing another example of a lamp system of a two-wheeler according to the fourth embodiment of the invention;

Fig. 30 is a perspective view of a two-wheeler showing another example of a lamp system of the fourth embodiment;

Fig. 31 is views showing a representative two-wheeler having a lamp system of the invention used in an experiment, (a) being a front view and (b) a side view;

Fig. 32 is views showing a representative two-wheeler having another lamp system of the invention used in an experiment, (a) being a front view and (b) a side view;

Fig. 33 is an image showing an ordinary two-wheeler traveling at speed 60Km/h and distance 60m;

Fig. 34 is a blank moving picture shown for 2.0 seconds;

Fig. 35 is an image showing a two-wheeler having a lamp system of the invention traveling at speed 85Km/h and distance 60m;

Fig. 36 is an image showing a two-wheeler having a lamp system of the invention traveling at speed 60Km/h and distance 60m;

Fig. 37 is an image showing a two-wheeler having a lamp system of the invention traveling at speed 35Km/h and distance 60m;

Fig. 38 shows two-wheeler with various lamp systems, (a) showing one in which an upper lamp height is 1360mm, (b) one in which an upper lamp height is 1150mm, and (c) one in which an upper lamp height is 940mm;

Fig. 39 shows perceived speeds of two-wheelers of when an experiment was carried out by multiple observers observing multiple moving pictures;

Fig. 40 is a graph showing the results shown in Fig. 39 as the proportions with respect to an ordinary two-wheeler of the perceived speeds of two-wheelers to which a measure of the invention was applied;

Fig. 41 is a graph showing the speed sensed by an observer when watching a two-wheeler approaching from a position 60m away at 60Km/h;

Fig. 42 is a graph showing the results shown in Fig. 41 as the proportions with respect to an ordinary two-wheeler of the perceived speeds of two-wheelers to which a measure of the invention was applied;

Fig. 43 is a graph showing the speed sensed by an observer when watching a two-wheeler approaching from a position 60m away at 60Km/h; and

Fig. 44 is a graph showing the results shown in Fig. 43 as the proportions with respect to an ordinary two-wheeler of the perceived speeds of two-wheelers to which a measure of the invention was applied.

Best Modes for Carrying Out the Invention

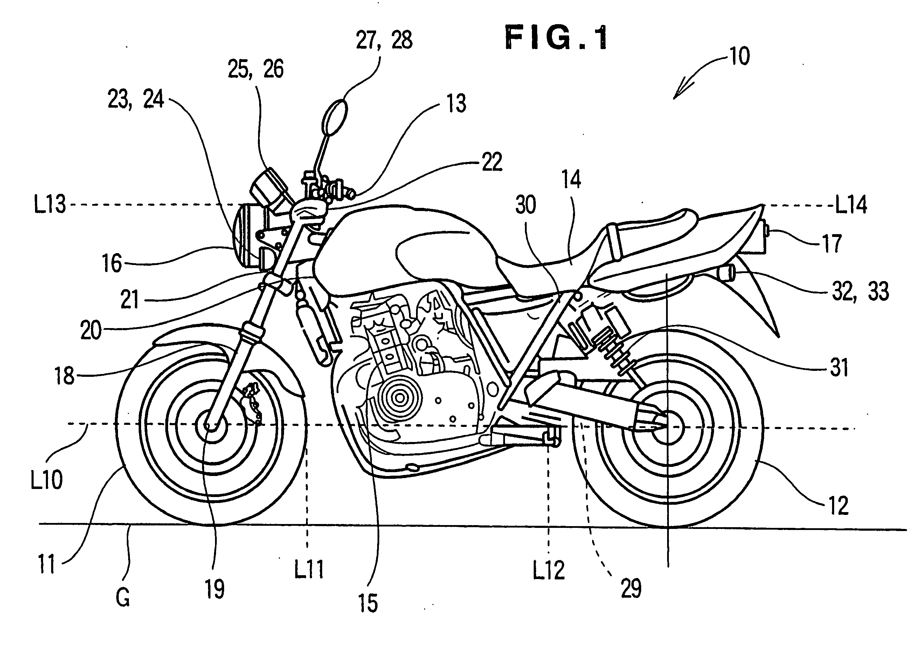

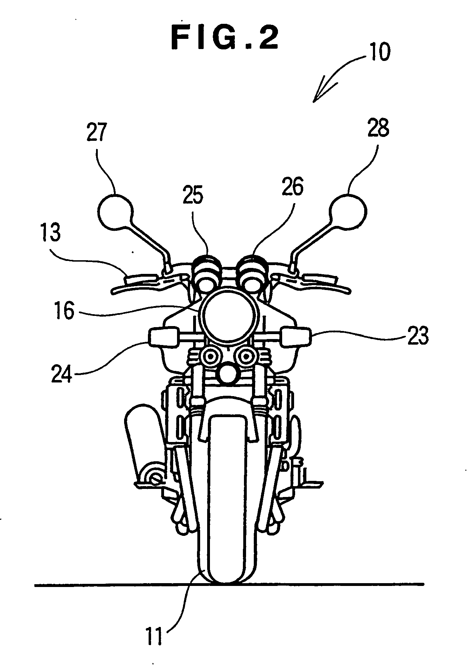

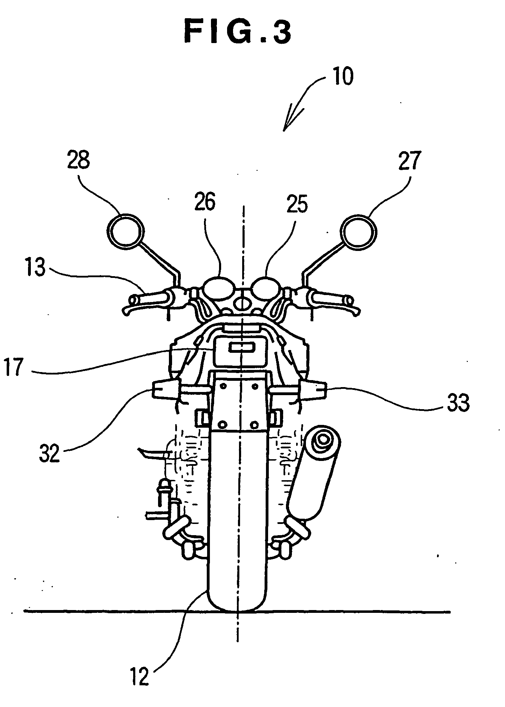

A number of embodiments of the invention will be described below in detail on the basis of the accompanying drawings, in which Fig. 1 through Fig. 4 are views showing positions for disposing a lamp on a two-wheeler. The term used herein represents a lamp and a light reflector.

In Fig. 1 through Fig. 3, a two-wheeler 10 has a front wheel 11, a rear wheel 12, handlebars 13, a seat 14, an engine 15, and a headlight 16 and a brake light 17, which are lamps. The front wheel 11 is mounted by its axle 19 being supported by a front fork 18. A steering stem (not shown) of the front fork 18 is supported steerably in a head pipe 21 provided at the front end of a frame 20. Above the head pipe 21 a handlebar base 22 is mounted on the top of the steering stem. The handlebars 13 are mounted on the handlebar base 22.

The headlight 16 is mounted in front of the head pipe 21, direction indicators 23, 24 are mounted on either side of the headlight 16, and instruments 25, 26 such as a speedometer are mounted above the headlight 16. Mirrors 27, 28 are also mounted on the handlebars 13.

The rear wheel 12 is mounted by its axle being supported by a rear swing arm 29. A rear cushion unit 31 is mounted between the rear swing arm 29 and a seat frame 30. The brake light 17 is mounted behind the seat 14, and direction indicators 32, 33 are mounted below the brake light 17 on either side of it.

In Fig. 1, the straight line L10 shows the height from the ground surface G of the position of the axles of the front wheel 11 and the rear wheel 12, the straight line L11 shows the position of the rearmost part of the front wheel, and the straight line L12 shows the position of the frontmost part of the rear wheel. The straight line L13 shows the height from the ground surface G of the top of the headlight 16, and the straight line L14 shows the height from the ground surface G of the top of the brake light 17. A lamp is disposed in the area lying below the straight line L10 and in front of the straight line L11.

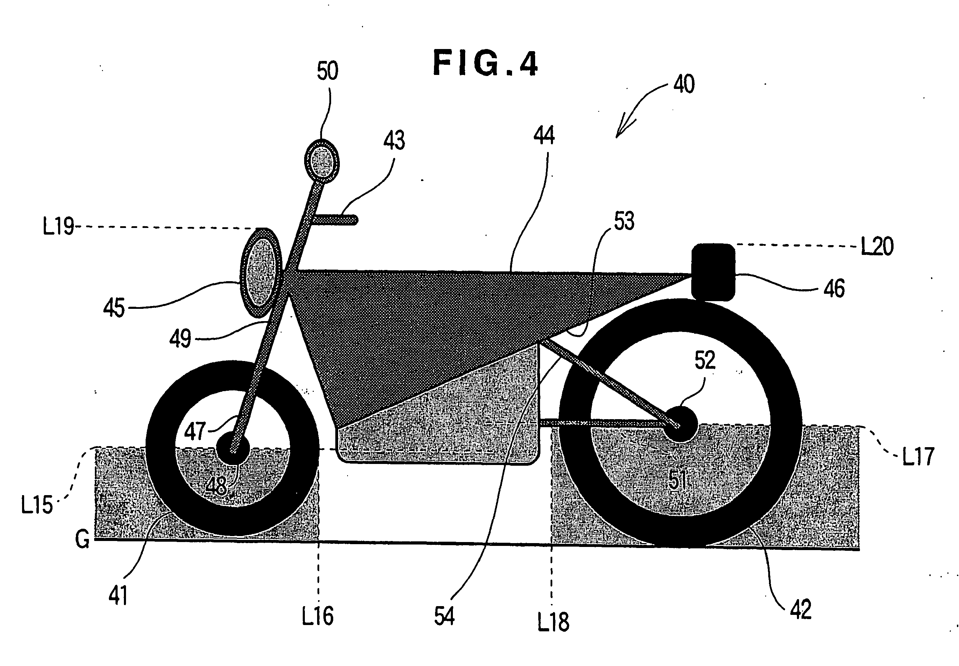

In Fig. 4, a two-wheeler 40 has a front wheel 41, a rear wheel 42, handlebars 43, a seat 44, an engine not shown in the figure, and a headlight 45 and a brake light 46, which are lamps.

The front wheel 41 is mounted by its axle 48 being supported by a front fork 47. The headlight 45 is mounted on the front of a head pipe 49, and a mirror 50 is mounted on the handlebars 43.

The rear wheel 42 is mounted by its axle 52 being supported on a rear swing arm 51. A rear cushion unit 54 is mounted between the rear swing arm 51 and a seat frame 53. The brake light 46 is mounted behind the seat 44.

In Fig. 4, the straight line L15 shows the height from the ground surface G of the position of the front axle, the straight line L16 shows the position of the rearmost part of the front wheel, the straight line L17 shows the height from the ground surface G of the position of the rear axle, and the straight line L18 shows the position of the frontmost part of the rear wheel. The straight line L19 shows the height from the ground surface G of the top of the headlight, and the straight line L20 shows the height from the ground surface G of the top of the brake light. A lamp is disposed in the area lying below L17 and behind L18.

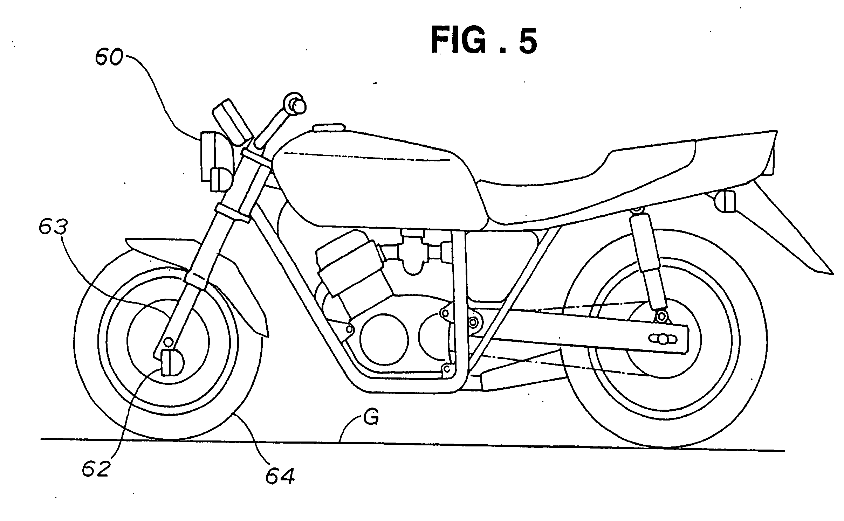

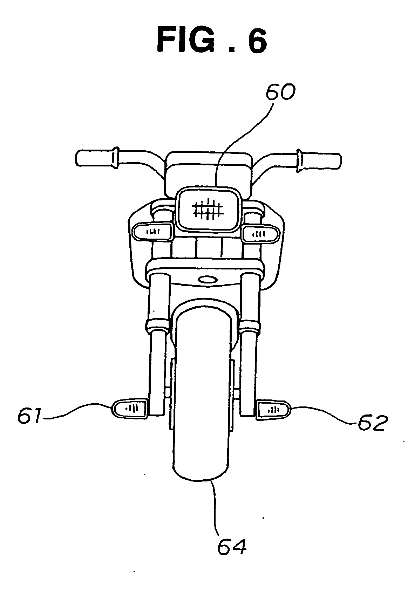

Fig. 5 and Fig. 6 are a side view and a front view of a lamp or lighting system for a two-wheeler according to a first embodiment of the invention. In the lamp system of this first embodiment, in Fig. 1 through Fig. 4, at least one lamp of a two-wheeler lamp system is disposed on the straight line L10 or L15 passing through the axle center of the front wheel 11 or 41 and parallel with the ground surface G, or below the straight line L10 or L15, and on the vertical line L11 or L16 dropping to the ground surface from the rearmost part of the front wheel 11 or 41, or in front of the vertical line L11 or L16, and in Fig. 5 and Fig. 6, besides a headlight 60 other lamps 61, 62 are mounted on the front fork 63 and disposed below the position of the axle of the front wheel 64 and in front of the position of the rearmost part of the front wheel 64.

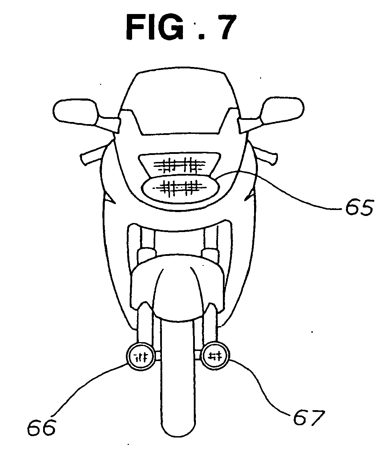

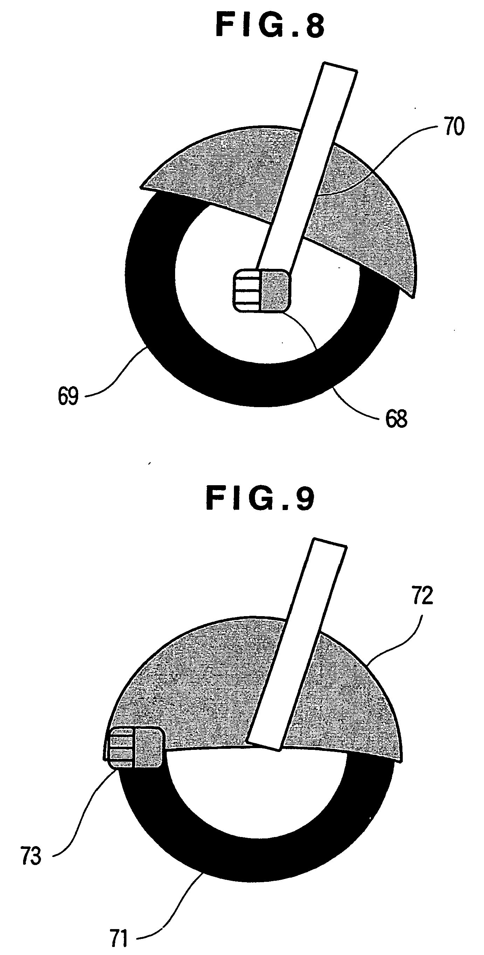

Fig. 7 shows a lamp system on a different kind of two-wheeler, in which a headlight 65 and lamps 66, 67 are provided as lamps. Fig. 8 is a schematic view of the front wheel of a two-wheeler. A lamp 68 is attached to the bottom part of the front fork 70 supporting the front wheel 69 and is disposed below the position of the axle of the front wheel 69 and in front of the position of the rearmost part of the front wheel 69.

Fig. 9 is a schematic view of a front wheel part showing another example of a lamp system according to the first embodiment shown in Fig. 8. In this lamp system, a lamp 73 other than a headlight (not shown) is disposed on a side face or the front face of a front fender 72 of the front wheel 71.

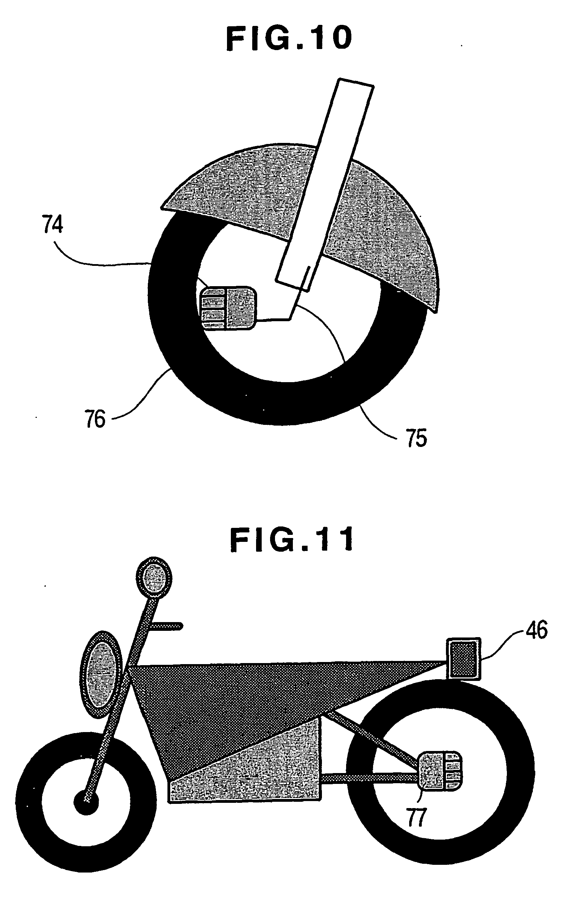

Fig. 10 is a schematic view of a front wheel part showing another example of a lamp system according to the first embodiment. In this lamp system, a lamp 74 other than a headlight (not shown) is mounted at a height below the axle of the front wheel 76, using a stay 75 or the like. As a second embodiment, in the two-wheeler lamp system of the first embodiment described above, the color of the lamp is made the same color type as the headlight.

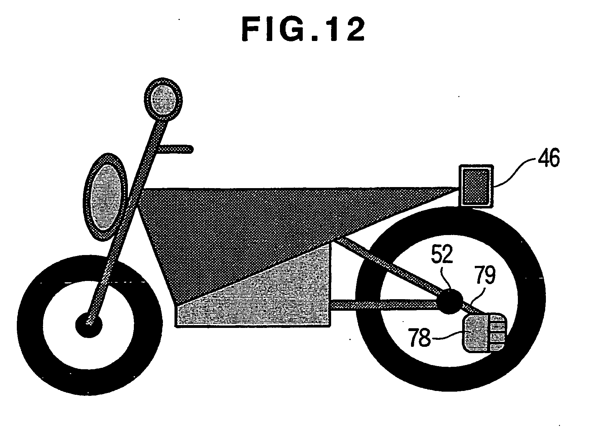

Fig. 11 and Fig. 12 are side views showing a two-wheeler lamp system of a third embodiment of the invention. This third embodiment shows a lamp system at the rear wheel wherein, in Fig. 1 through Fig. 4, at least one lamp of a two-wheeler lamp system is disposed on the straight line L10 or L17 passing through the axle center of the rear wheel 12 or 42 and parallel with the ground surface, or below the straight line L10 or L17, and on the vertical line L12 or L18 dropping to the ground surface from the frontmost part of the rear wheel 12 or 42, or behind the vertical line L12 or L18.

In Fig. 11, in the two-wheeler shown in Fig. 4, besides a brake light 46 a lamp 77 is mounted in a position at the axle, and in Fig. 12, besides a brake light 46 a lamp 78 is mounted below the axle 52 using a stay 79 or the like.

Next, the method and results of an experiment to show the effects on sense of distance perception accuracy of a lamp system in a two-wheeler of the first embodiment will be discussed.

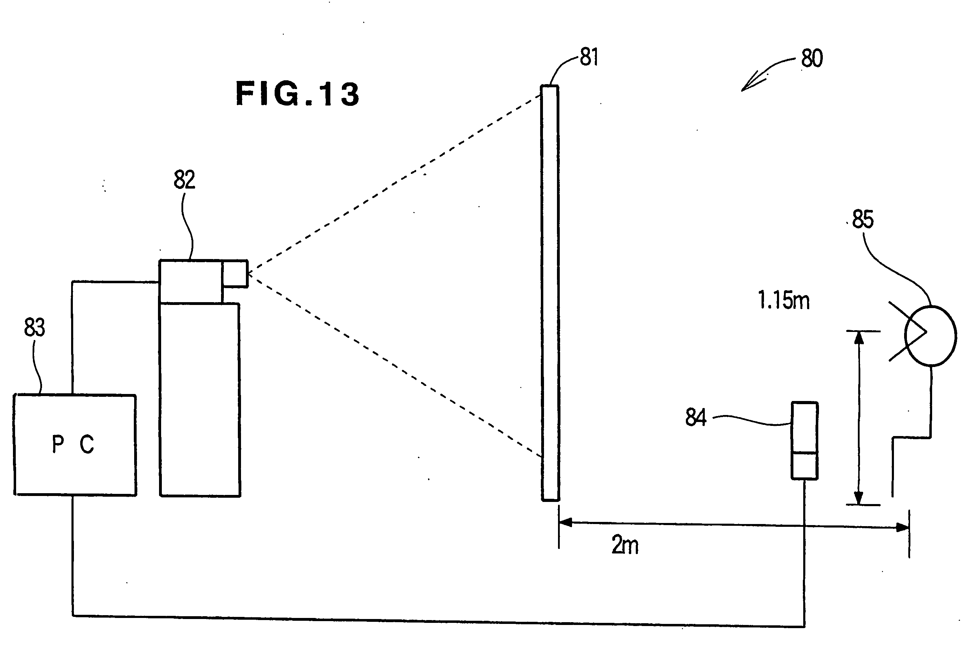

Fig. 13 is a schematic view of an apparatus used for the experiment. The experiment apparatus 80 is made up of a large screen 81, a projector 82, a personal computer 83 and a reaction button 84. Computer graphics generated by the personal computer 83 can be projected onto the large screen 81 with the projector 82. The reaction button 84 is a button to be pushed by an observer 85 watching a moving picture projected onto the large screen 81, and is connected to the personal computer 83.

The experiment was carried out as follows. A computer graphics picture on the large screen 81 was used to recreate a traffic environment and an ordinary two-wheeler approaching at a speed of 60Km/h on a road 80m from the observer, and a two-wheeler to which a measure according to the invention was applied approaching at 60Km/h at various distances. The ordinary two-wheeler (NORMAL) and the two-wheeler to which a measure according to the invention was applied (LOW) were shown traveling side by side for 0.5 seconds. This moving picture was observed from a distance of 2m from the large screen 81 with the position of the eyes 1.15m from the floor. Then, by pushing the reaction button 84, the observer responds, as the result of the observation, with the two-wheeler which seemed the closer of the two two-wheelers.

Moving pictures in which the state of travel of the ordinary two-wheeler was made the same in every moving picture and the speed of the two-wheeler to which a measure according to the invention was applied was made the same in every moving picture but its distance was varied were projected onto the large screen and the observer responded with the two-wheeler which seemed the closer using the reaction button. This experiment was carried out with multiple observers, and an equivalent value of psychological distance of when the distance from the observer of the two-wheeler to which a measure according to the invention was applied (LOW) was varied about that of the ordinary two-wheeler (NORMAL) was obtained by a limit method and this equivalent value was taken as a perceived distance.

Here, the psychological distance is the distance of the two-wheeler perceived by the observer watching the moving picture. The limit method referred to here is a type of psychophysical measurement method and for example refers to a method wherein two bodies at different distances are shown simultaneously, a case is shown wherein with the distance of one of the bodies having been fixed the distance of the other body is closer, and the two bodies are shown simultaneously with the distance of one of the bodies being changed in one direction, and a measurement is taken by an observer choosing the moving picture in which the two bodies are at the same distance.

In this experiment, the two bodies were the ordinary two-wheeler and the two-wheeler to which a measure according to the invention was applied, and the distance of the ordinary two-wheeler was kept fixed while the distance of the two-wheeler to which a measure according to the invention was applied was changed. That is, the two-wheeler to which a measure according to the invention was applied was made to move gradually further away, from a distance clearly closer than the ordinary two-wheeler kept at a fixed distance, and their distances were compared. And the point at which the judgment of the observer changes from 'near' to 'far' was recorded. And then, conversely, it was made to approach from a position clearly further away, and the point at which the judgment of the observer changed was recorded again in the same way. This is repeated a number of times, and the average of the points of change was taken as an equivalent value and taken as a perceived distance.

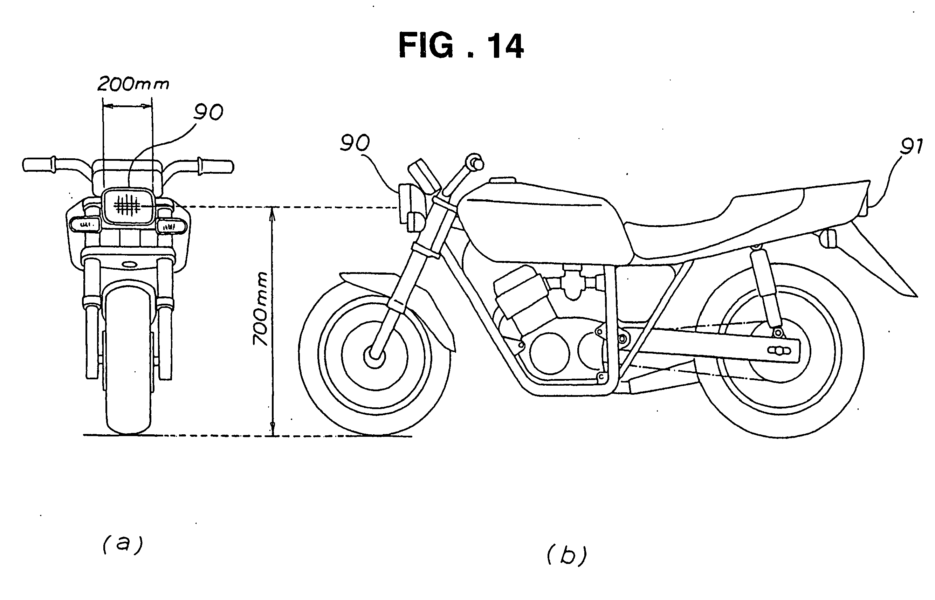

Fig. 14 is a front view (a) and a side view (b) showing the ordinary two-wheeler used in the experiment, which is fitted with no lamps other than a headlight 90 and a brake light 91 and direction indicators.

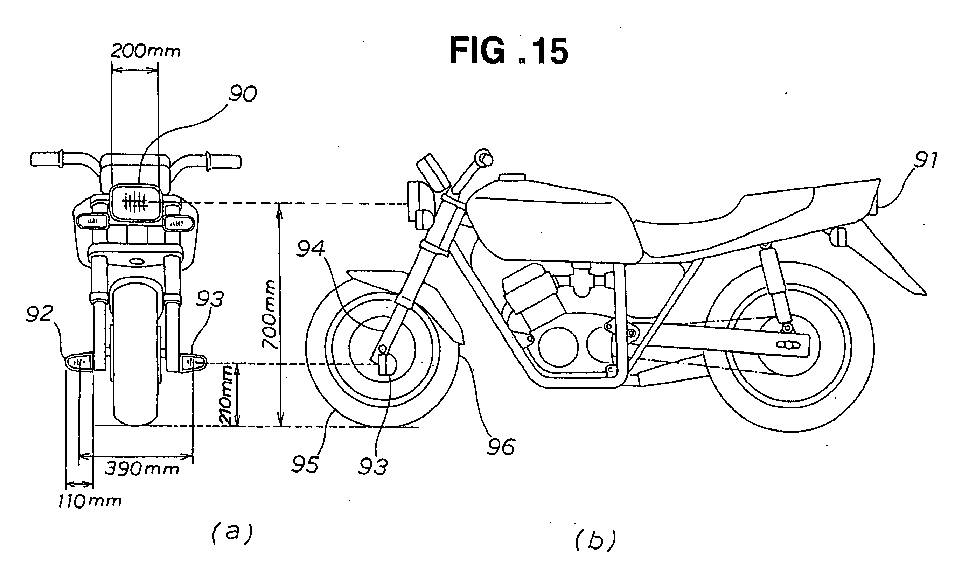

Fig. 15 is a front view (a) and a side view (b) showing a two-wheeler with a lamp system according to the invention used in the experiment, wherein besides the headlight 90, which is of width 200mm and mounted in a position at height 700mm, and the brake light 91 on the ordinary two-wheeler, lamps 92, 93 of width 110mm at a position of height 210mm are mounted 390mm apart on the front fork 94 below the position of the axle of the front wheel 95 and forward of the position of the rearmost part 96 of the front wheel 95.

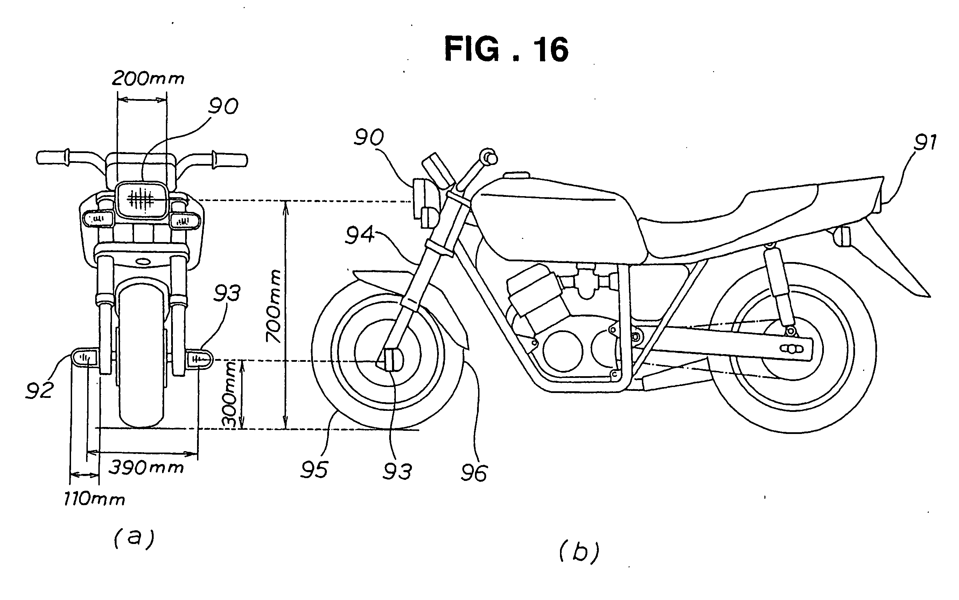

Fig. 16 is a front view (a) and a side view (b) of a two-wheeler with another lamp system according to the invention used in the experiment, wherein besides the headlight 90 of width 200mm mounted in a position at height 700mm and the brake light 91 on the ordinary two-wheeler, lamps 92, 93 of width 110mm at a position of height 300mm are mounted 390mm apart on the front fork 94 below the position of the axle of the front wheel 95 and forward of the position of the rearmost part 96 of the front wheel 95.

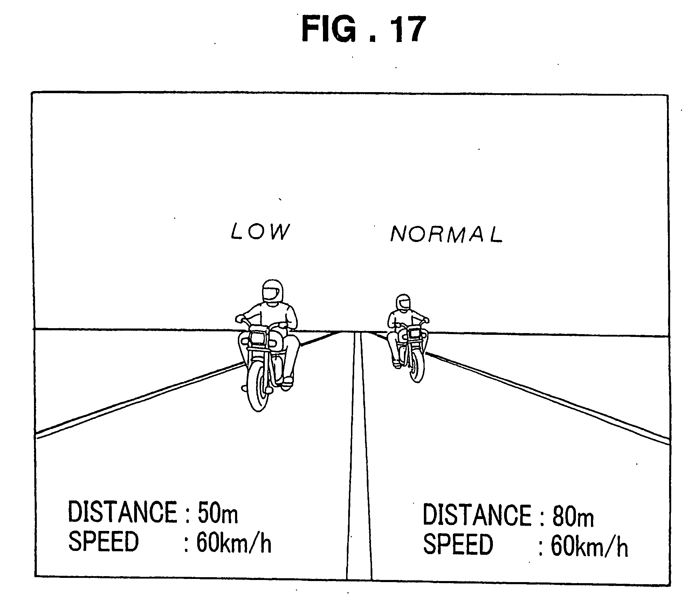

Fig. 17, Fig. 18 and Fig. 19 show three representative static images from the time of commencement of presentation of the moving pictures, among the moving pictures presented in this experiment.

Fig. 17 is an image showing the ordinary two-wheeler (NORMAL) traveling at speed 60Km/h, distance 80m and the two-wheeler to which a measure according to the invention was applied (LOW) traveling at speed 60Km/h, distance 50m.

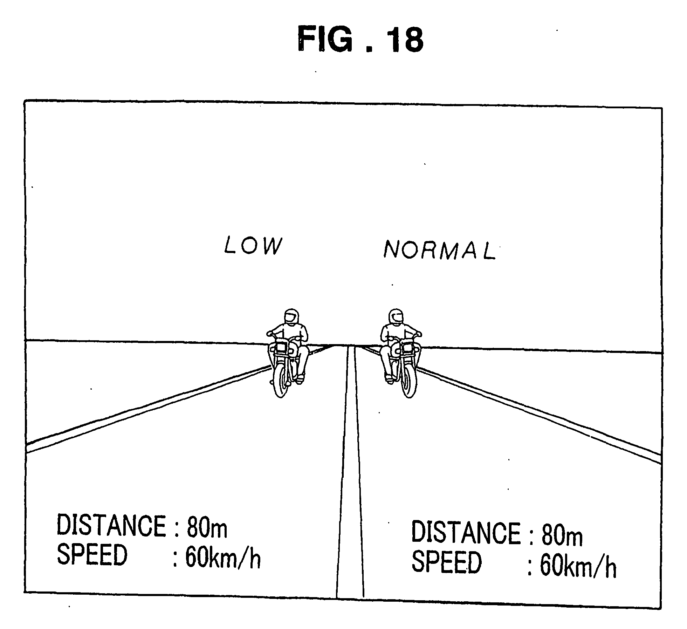

Fig. 18 is an image showing the ordinary two-wheeler (NORMAL) traveling at speed 60Km/h, distance 80m and the two-wheeler to which a measure according to the invention was applied (LOW) traveling at speed 60Km/h, distance 80m.

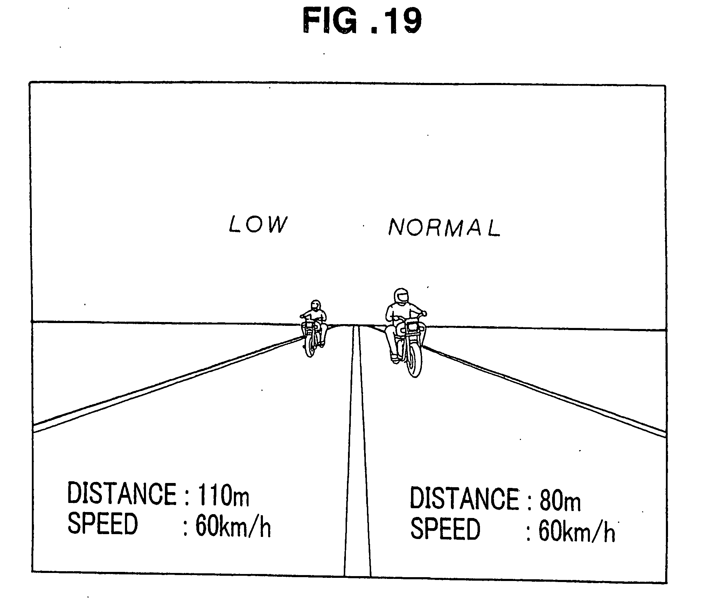

Fig. 19 is an image showing the ordinary two-wheeler (NORMAL) traveling at speed 60Km/h, distance 80m and the two-wheeler to which a measure according to the invention was applied (LOW) traveling at speed 60Km/h, distance 110m.

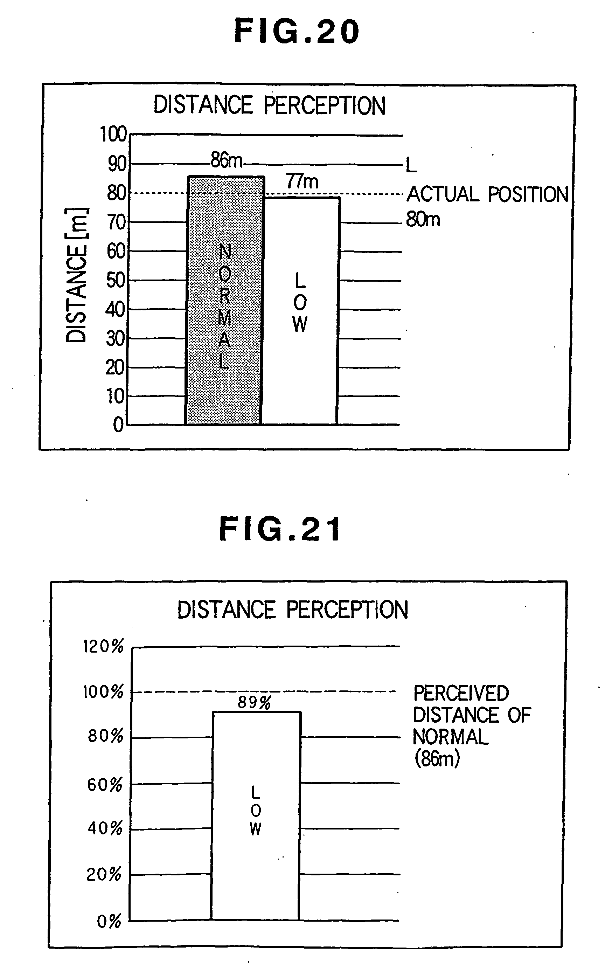

Fig. 20 is a graph showing the respective perceived distances of the two-wheelers when multiple moving pictures represented by Figs. 17, 18 and 19 were observed by multiple observers in the experiment. This graph shows results obtained with the two-wheeler to which a measure according to the invention was applied having the height of the low lamps shown in Fig. 15 at 210mm. The vertical axis shows perceived distance, and the bar graph (NORMAL) shows the perceived distance of the ordinary two-wheeler and the bar graph (LOW) shows the perceived distance of the two-wheeler to which a measure according to the invention was applied. The straight line L shows 80m, which is the actual distance of the ordinary two-wheeler.

As can be seen from Fig. 20, whereas the perceived distance with the ordinary two-wheeler (NORMAL) is further, at 86m, than the real distance, the perceived distance with the two-wheeler to which a measure according to the invention was applied (LOW) is nearer, at 77m, than the real distance.

Fig. 21 is a graph showing the results shown in Fig. 20 as a proportion with respect to the ordinary two-wheeler (NORMAL) of the perceived distance of the two-wheeler to which a measure according to the invention was applied (LOW). The vertical axis shows percentage, with the perceived distance of the ordinary two-wheeler taken as 100%. It can be seen that the two-wheeler of the invention seems 11% closer than the ordinary two-wheeler.

The above experimental results can be interpreted to mean that because at least one lamp of a two-wheeler lamp system is disposed on the straight line passing through the axle center of the front wheel and parallel with the ground surface, or below the straight line, and on the vertical line dropping to the ground surface from the rearmost part of the front wheel, or forward of the vertical line, others can perceive its distance more easily. And this can be interpreted to be because since the lamps mounted low are conspicuous, visibility has increased. Also, it can be interpreted to be because as a result of the lamps being mounted low and forward, the apparent size of the two-wheeler has increased.

Next, the method and results of an experiment to show the effects on sense of distance perception accuracy of making the color of the lamps the same color type as the headlight (second embodiment) and making them a different color type in the lamp system of the two-wheeler according to the first embodiment will be discussed. The apparatus used in the experiment is the same apparatus the apparatus shown in Fig. 13. Here, 'same color type' is not particularly limited as long as there is no sense of incongruity compared to the color of the lamp constituting the reference, but preferably, when the angle of vision with respect to the lamp being observed is 4° or below, in the CIE1976 UCS chromaticity chart (XYZ color specification) (defined by JIS Z 8729), when the chromaticity point of the lamp color (F1) constituting the reference is $F1(u_1',v_1')$ and the chromaticity point of the lamp color (F2) constituting the comparison is $F2(u_2',v_2')$, the chromaticity difference $\Delta E$ between the chromaticity point F1 and the chromaticity point F2 is shown by expression (1).

$$\Delta E = \sqrt{(u_1{'}\text{-}u_2{'})^2+(v_1{'}\text{-}v_2{'})^2} \qquad \cdots(1)$$

The chromaticity difference $\Delta E$ given by this expression (1) is not greater than 0.10, and does not depend on brightness difference. And, when the angle of vision is more than 4°, it is defined in the same way using the CIE 1976 UCS chromaticity chart ($X_{10}Y_{10}Z_{10}$ color specification) (defined in JIS Z 8729).

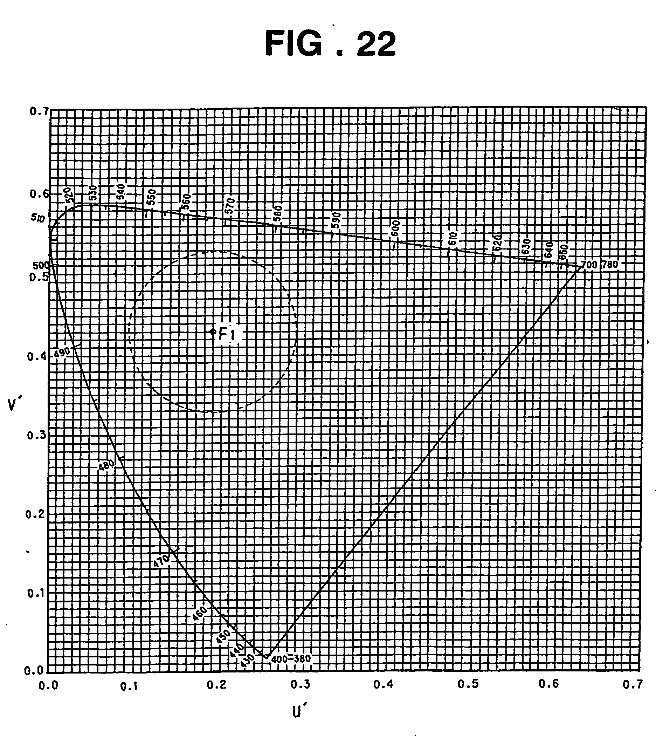

Fig. 22 shows a CIE1976 UCS chromaticity chart (XYZ color specification) (extracted from JIS Z 8729), in which when the chromaticity point of the reference lamp color (F1) is $F1(u_1{'},v_1{'})$, the area bounded by the dashed line is taken as the same color type.

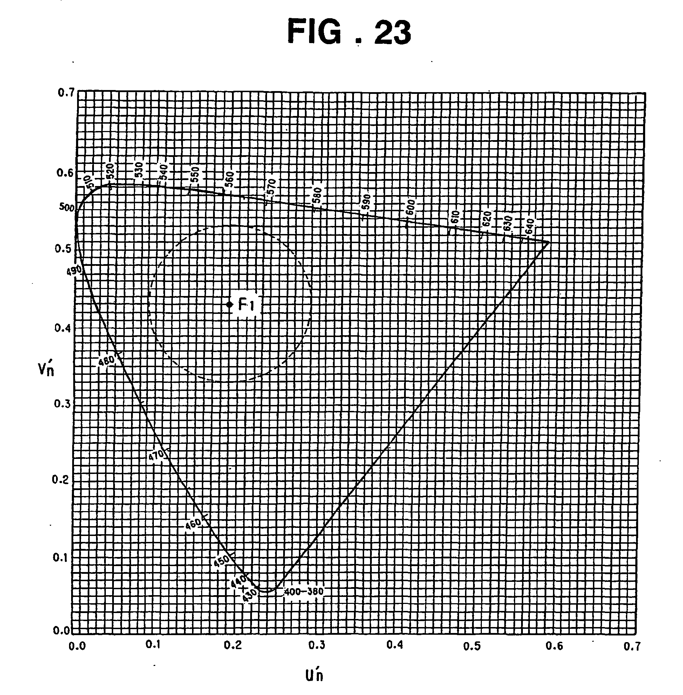

Fig. 23 shows a CIE1976 UCS chromaticity chart ($X_{10}Y_{10}Z_{10}$ color specification) (extracted from JIS Z 8729), in which when the chromaticity point of the reference lamp color (F1) is $F1(u_1{'},v_1{'})$, the area bounded by the dashed line is taken as the same color type.

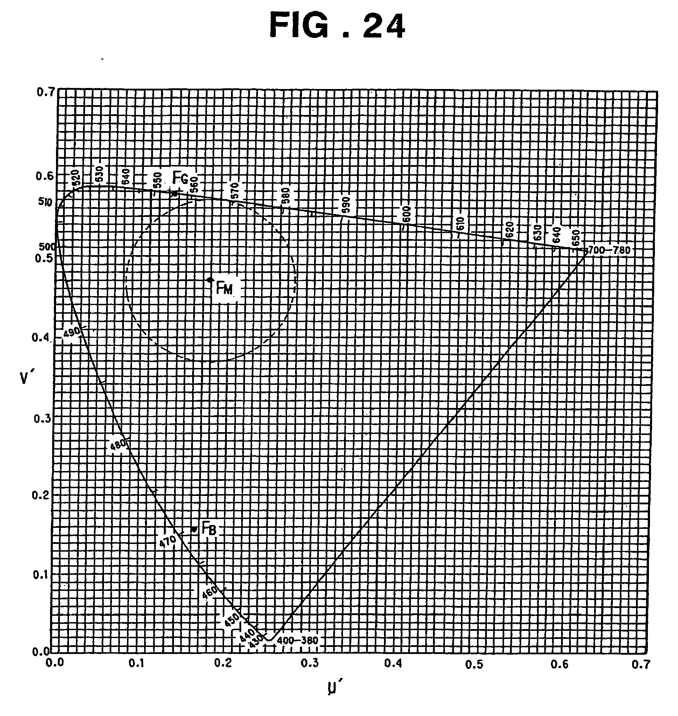

In this experiment, for the headlight color (Fm) the color given by the chromaticity point $Fm(u_m{'}=0.178, v_m{'}=0.471)$ in Fig. 24 was used, and for the lamp of the same color type a color in the area bounded by the dashed line was used. The color of the same type (Fw) actually used was the same color as (Fm). And, as a different color, a green (FG) and a blue (FB) were used, and as these the chromaticity points $FG(u_G{'}=0.137, v_G{'}=0.576)$, $FB(u_B{'}=0.163, v_B{'}=0.157)$ in Fig. 24 were used.

The experiment was carried out as follows. A computer graphics picture on the large screen 81 shown in Fig. 13 was used to recreate a traffic environment and an ordinary two-wheeler approaching on a road 80m from the observer at a speed of 60Km/h, and a two-wheeler to which a measure according to the invention was applied, and to which lamps of one of different color types have been mounted, approaching at 60Km/h at various distances. The ordinary two-wheeler (NORMAL) and the two-wheeler to which a measure according to the invention was applied (LOW) were shown traveling side by side for 0.5 seconds. This moving picture was observed from a distance of 2m from the large screen 81 with the position of the eyes 1.15m from the floor. Then, by pushing the reaction button 84, the observer responds, as the result of the observation, with the two-wheeler which seemed the closer of the two two-wheelers.

Moving pictures in which the state of travel of the ordinary two-wheeler was made the same in every picture and the speed of the two-wheeler to which a measure according to the invention was applied was made the same in every picture but its distance and lamp color were varied were shown on the large screen and the observer responded with the two-wheeler which seemed the closer using the reaction button. This experiment was carried out with multiple observers, and an equivalent value of psychological distance of when the distance from the observer of the two-wheeler to which a measure according to the invention was applied (LOW) was varied about that of the ordinary two-wheeler (NORMAL) was obtained by a limit method for each lamp color and this equivalent value was taken as a perceived distance for each lamp color.

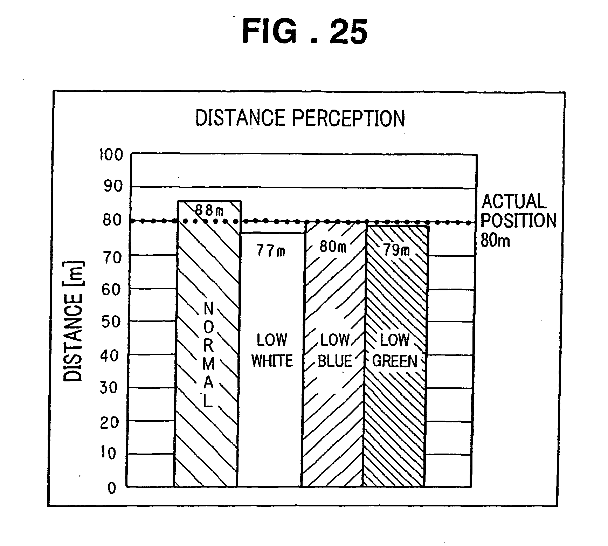

Fig. 25 is a graph showing the respective perceived distances of the two-wheelers when multiple moving pictures of the kind represented by Figs. 17, 18 and 19 with different lamp colors were observed by multiple observers in the experiment. This graph shows results obtained with the two-wheeler to which a measure according to the invention was applied having the height of the low lamps shown in Fig. 15 at 300mm. The height of the headlight is 700mm. The vertical axis shows perceived distance. The bar graph (NORMAL) shows the perceived distance of the ordinary two-wheeler, and the bar graph (LOW white), the bar graph (LOW blue) and the bar graph (LOW green) show the perceived distance of a two-wheeler of the invention with the color of its lamp white and thus the same color type as the headlight, the perceived distance of a two-wheeler of the invention with the color of its lamp blue and thus a different color type from the headlight, and the perceived distance of a two-wheeler of the invention with the color of its lamp green and thus a different color type from the headlight. The straight line L shows 80m, which is the actual distance of the ordinary two-wheeler.

As can be seen from Fig. 25, whereas the perceived distance with the ordinary two-wheeler (NORMAL) is further, at 86m, than the real distance, the perceived distance with the two-wheeler (LOW white) to which a measure according to the invention was applied having lamps of the same color type as the headlight is nearer, at 77m, than the real distance. And with the two-wheeler (LOW blue) having lamps of a different color type from the headlight the perceived distance was 80m, and with the two-wheeler (LOW green) having lamps of a different color type from the headlight the perceived distance was 79m, from which it can be seen that the two-wheeler having lamps of the same color type as the headlight seems closer than the two-wheelers having lamps of different color types from the headlight.

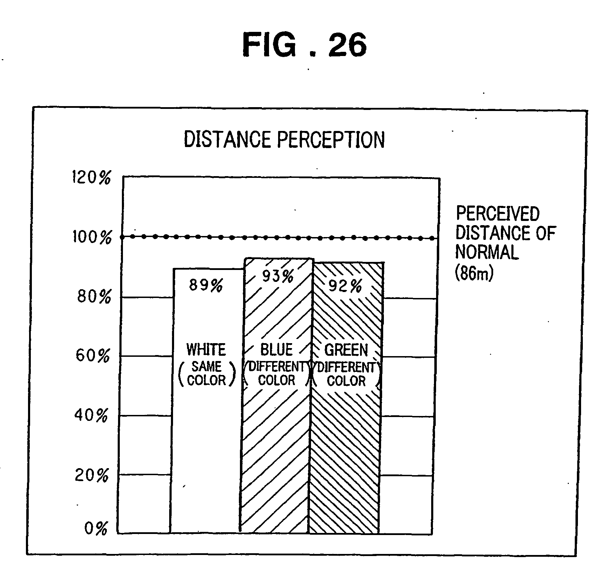

Fig. 26 is a graph showing the results shown in Fig. 25 as a proportion with respect to the ordinary two-wheeler (NORMAL) of the perceived distances of the two-wheeler having lamps of the same color type as the headlight (LOW white), the two-wheeler (LOW blue) whose lamps are blue and thus of a different color type from the headlight, and the two-wheeler (LOW green) whose lamps are green and thus of a different color type from the headlight to which a measure according to the invention was applied. The vertical axis shows percentage, with the perceived distance of the ordinary two-wheeler taken as 100%. It can be seen that the two-wheeler of the invention having lamps of the same color as the headlight seems 11% closer than the ordinary two-wheeler. It can be seen that the two-wheeler whose lamps are blue and thus of a different color type from the headlight seems 7% closer than the ordinary two-wheeler, and the two-wheeler whose lamps are green and thus of a different color type from the headlight seems 8% closer than the ordinary two-wheeler. Thus, it can be seen that the two-wheeler having lamps of the same color type as its headlight seems the closest.

The above experimental results can be interpreted to mean that because at least one lamp of the same color type as the headlight of a two-wheeler lamp system is disposed on the straight line passing through the axle center of the front wheel and parallel with the ground surface, or below the straight line, and on the vertical line dropping to the ground surface from the rearmost part of the front wheel, or forward of the vertical line, and the lamp is thus mounted low, others can perceive its distance more easily. And this can be interpreted to be because since the lamps mounted low are conspicuous, visibility has increased. Also, it can be interpreted to be because as a result of the lamps being mounted low and forward, the apparent size of the two-wheeler has increased.

As a result of lamps of the same color type as the headlight being provided, the two-wheeler becomes easier to recognize as a single body, and others can perceive its distance more easily.

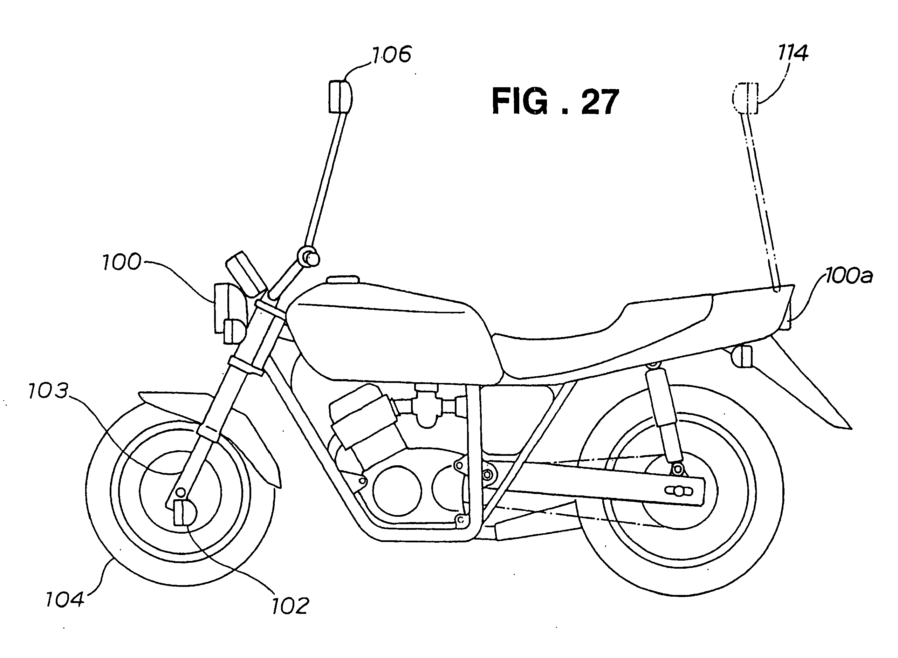

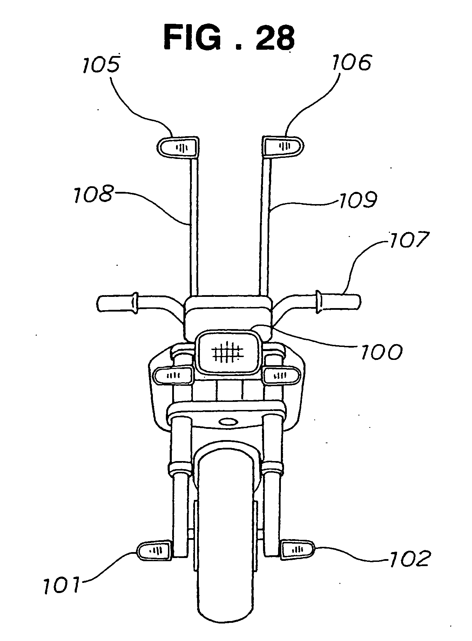

Fig. 27 and Fig. 28 are a side view and a front view showing a two-wheeler lamp system of a fourth embodiment of the invention.

In the lamp system in this fourth embodiment, in Fig. 1 through Fig. 4, in addition to the two-wheeler lamp system of the first embodiment, at least one lamp is positioned above the height of the headlight of the two-wheeler, and in Figs. 27 and 28, besides a headlight 100, lamps 101, 102 are mounted on the front fork 103 and positioned below the position of the axle of the front wheel 104 and forward of the position of the rearmost part of the front wheel 104. And lamps 105, 106 are mounted above the position of the headlight 100 on pipes 108, 109 attached to the handlebars 107.

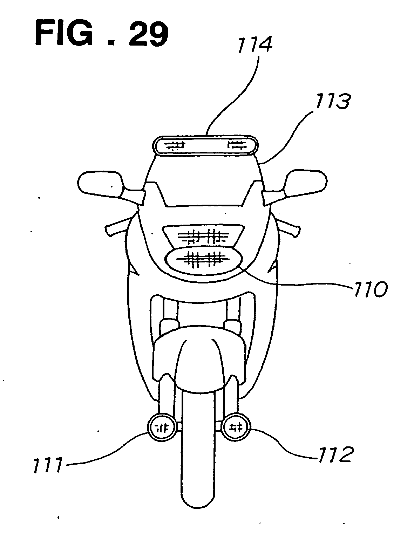

Fig. 29 shows another example of a two-wheeler lamp system according to the fourth embodiment, in which a headlight 110 and lamps 111, 112 are mounted as lamps. Also, a lamp 114 is attached to the top of a front shield 113.

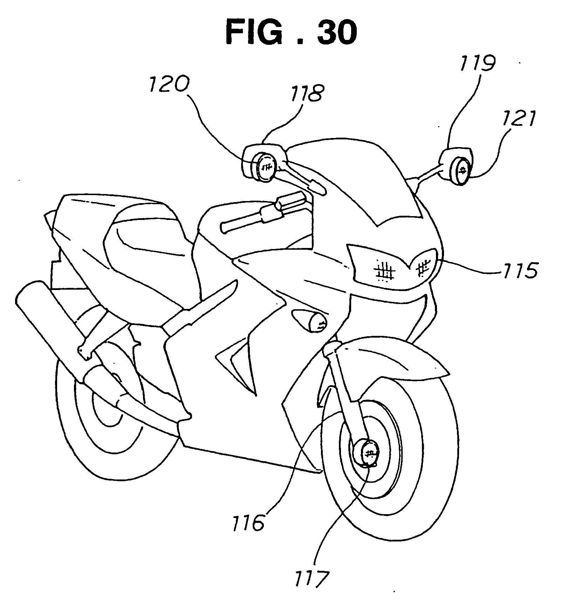

Fig. 30 is a perspective view showing a further example of a two-wheeler lamp system according to the fourth embodiment. In this lamp system, besides a headlight 115 and a lamp 117 mounted on the front fork 116, lamps 120, 121 are mounted on the backs of mirrors 118, 119. Although in these examples the lamps are mounted on the top of a front shield and on mirrors, lamps can alternatively be mounted at the position of the instruments or on other parts, as long as they are higher than the headlight. As a fifth embodiment, in a two-wheeler lamp system according to the fourth embodiment, the color of the lamps is made the same color type as the headlight.

Whereas in each of Fig. 27 through Fig. 30 a front lamp arrangement in a two-wheeler lamp system was shown, similarly at the rear of a two-wheeler, in addition to the two-wheeler lamp system set forth in the third embodiment, as shown with broken lines in Fig. 27, one or more lamps 114 can be mounted facing rearward at a height above that of the brake light 100a of the two-wheeler (sixth embodiment).

In the lamp systems described above, preferably, the height difference between the highest lamp and the lowest lamp of the two-wheeler lamp system is at least 50% of the overall height of the two-wheeler (seventh embodiment).

Next, the method and results of an experiment to show the effects on sense of speed perception accuracy of a two-wheeler lamp system according to the fourth embodiment will be discussed. The apparatus used for the experiment was the same apparatus as that used in the experiment in the first embodiment shown in Fig. 13.

The experiment was carried out as follows. A computer graphics picture on the large screen 81 was first used to recreate a traffic environment and an ordinary two-wheeler approaching on a road 60m from the observer at 60Km/h. The moving picture of the traveling ordinary two-wheeler (NORMAL) was shown for 0.5 seconds, a 2.0 second blank was shown, and immediately after that a moving picture of a two-wheeler of the invention approaching at one of various speeds on a road 60m from the observer was shown for 0.5 seconds. These moving pictures were observed from a distance of 2m from the large screen 81 with the position of the eyes 1.15m from the floor. Then, by pushing the reaction button, the observer responds, as the result of the observation, with the two-wheeler which seemed to be moving the faster of the two two-wheelers.

Moving pictures in which the state of travel of the ordinary two-wheeler was made the same in every moving picture and the distance of the two-wheeler to which a measure according to the invention was applied was made the same but its speed was varied were shown on the large screen and the observer responded with the two-wheeler which seemed the faster using the reaction button. This experiment was carried out with multiple observers, and an equivalent value of psychological speed of when the distance from the observer of the two-wheeler to which a measure according to the invention was applied (LONG) was varied about that of the ordinary two-wheeler (NORMAL) were obtained by a limit method and this equivalent value was taken as a perceived speed.

Here, psychological speed is the speed of the two-wheeler perceived by the observer watching the moving picture. The limit method referred to here is the same as that explained in the first embodiment and is a type of psychophysical measurement method and refers to a method wherein two bodies at different speeds are shown at a short interval, a case is shown wherein with the speed of one of the bodies having been fixed the speed of the other body is faster, and the two bodies are shown at short intervals with the speed of one of the bodies being gradually changed in one direction, and a measurement is taken by an observer choosing the moving picture in which the two bodies are at the same speed.

In this experiment, the two bodies were the ordinary two-wheeler and the two-wheeler to which a measure according to the invention was applied, and the speed of the ordinary two-wheeler was kept fixed while the speed of the two-wheeler to which a measure according to the invention was applied was changed. That is, the two-wheeler to which a measure according to the invention was applied was gradually made slower from a moving picture clearly faster than the ordinary two-wheeler kept at a fixed speed, and their speeds were compared. The point at which the judgment of the observer changes from 'fast' to 'slow' is recorded. Then, conversely, the speed is increased, from a clearly slow moving picture, and the point at which the judgment of the observer changes is recorded again in the same way. This is repeated a number of times, and the average of the points of change is taken as an equivalent value and taken as a perceived speed.

The ordinary two-wheeler used in the experiment was the one shown in Fig. 14, which is fitted with no lamps other than a headlight 90 and a brake light 91 and direction indicators.

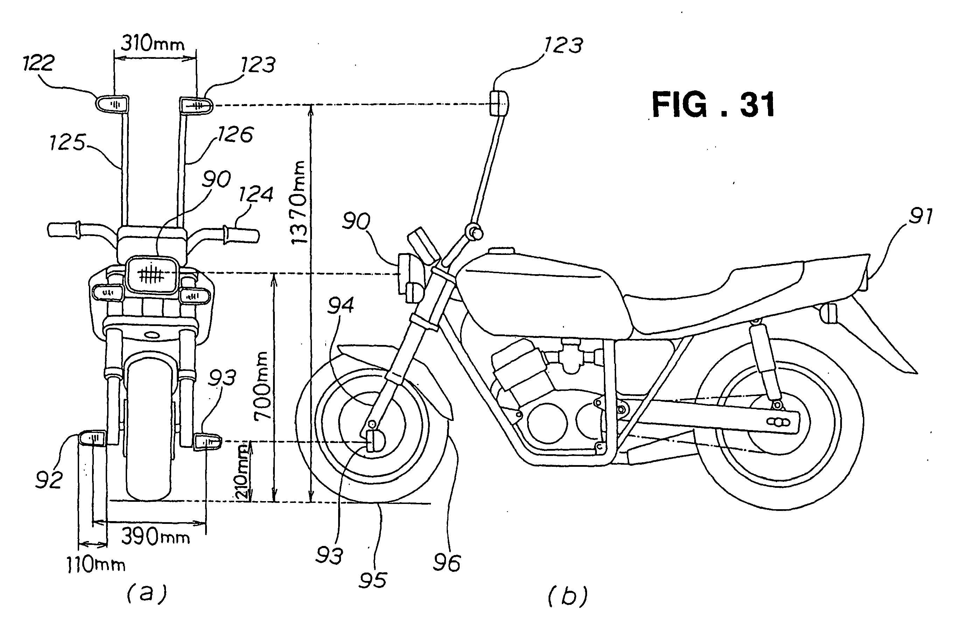

Fig. 31 is a front view (a) and a side view (b) showing a representative two-wheeler with a lamp system according to the invention used in the experiment, on which besides the headlight 90 mounted in a position at height 700mm and the brake light 91 on the ordinary two-wheeler, lamps 92, 93 of width 110mm at a position of height 210mm are mounted 390mm apart on the front fork 94 below the position of the axle of the front wheel 95 and forward of the position of the rearmost part 96 of the front wheel 95. Also, lamps 122, 123 of width 110mm are mounted 310mm apart at a position of height 1370mm above the position of the headlight 90 on pipes 125, 126 attached to the handlebars 124.

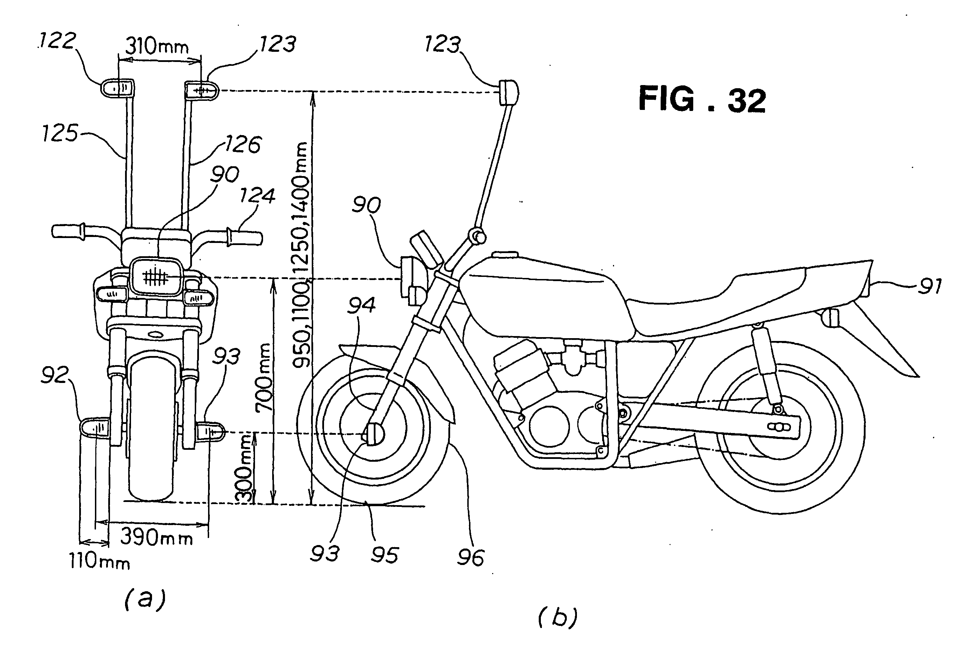

Fig. 32 includes a front view (a) and a side view (b) showing another representative two-wheeler with a lamp system according to the invention used in the experiment, on which besides the headlight 90 mounted in a position at height 700mm and the brake light 91 on the ordinary two-wheeler, lamps 92, 93 of width 110mm at a position of height 300mm are mounted 390mm apart on the front fork 94 below the position of the axle of the front wheel 95 and forward of the position of the rearmost part 96 of the front wheel 95. Also, lamps 122, 123 of width 110mm are mounted 310mm apart at a position of height 950mm, 1100mm, 1250mm or 1400mm above the position of the headlight 90 on pipes 125, 126 attached to the handlebars 124.

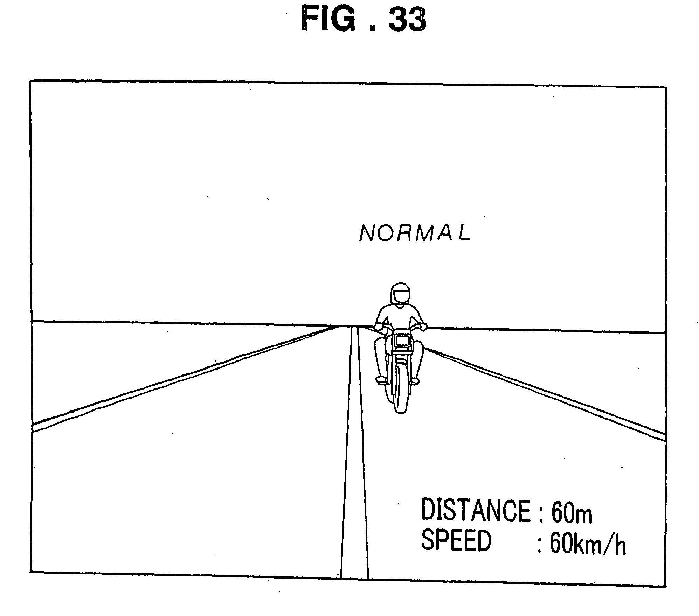

Fig. 33 shows a static image from the time of commencement of presentation of the moving picture of the ordinary two-wheeler, among the moving pictures used in the experiment. Fig. 33 is an image showing an ordinary two-wheeler (NORMAL) traveling at 60Km/h at a distance of 60m.

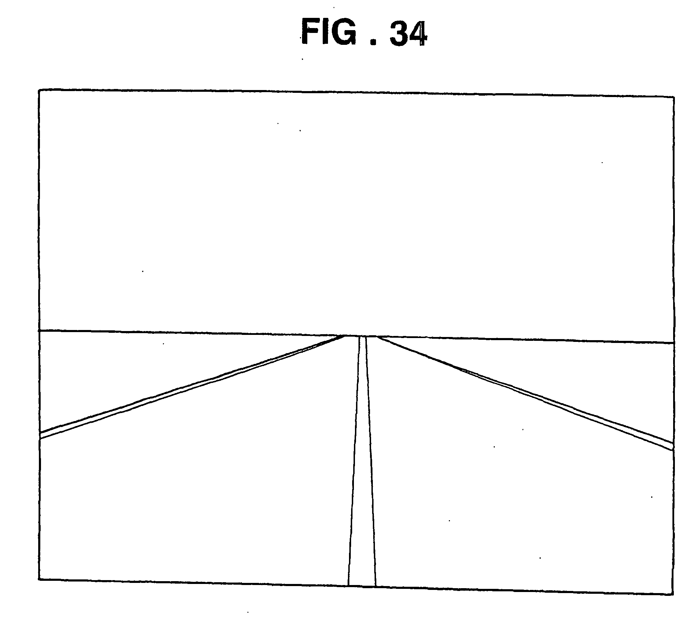

Fig. 34 is a blank moving picture shown for 2.0 seconds.

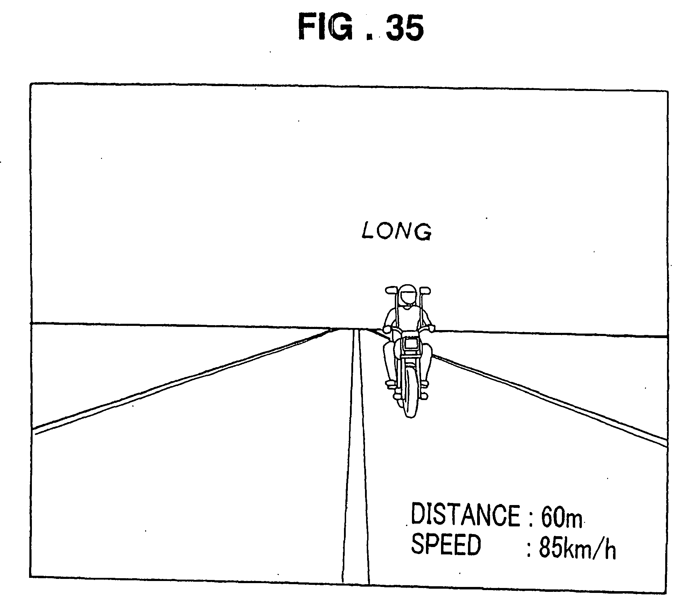

Fig. 35 is an image showing a two-wheeler with a lamp system of the invention traveling at speed 85Km/h, distance 60m.

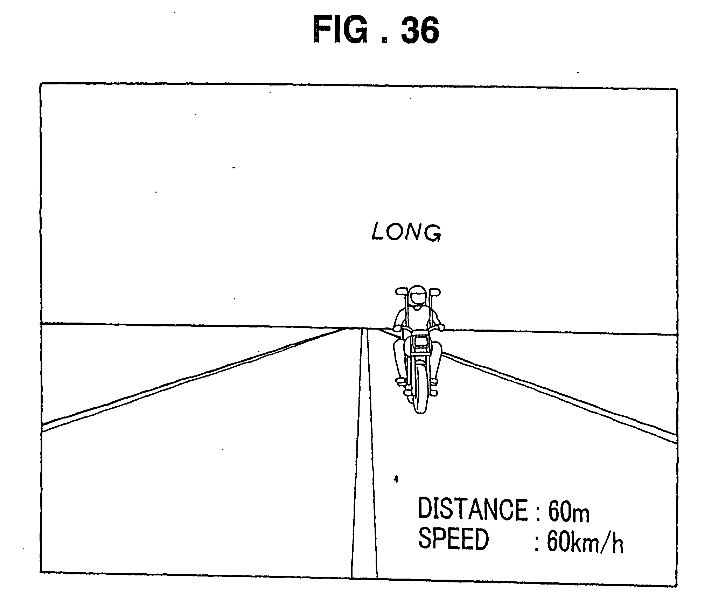

Fig. 36 is an image showing a two-wheeler (LONG) with a lamp system of the invention traveling at speed 60Km/h, distance 60m.

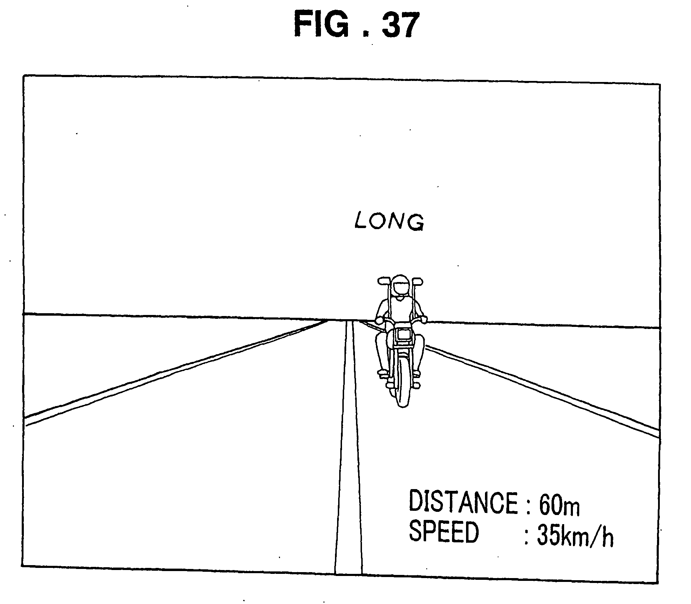

And Fig. 37 is an image showing a two-wheeler (LONG) with a lamp system of the invention traveling at speed 35Km/h, distance 60m.

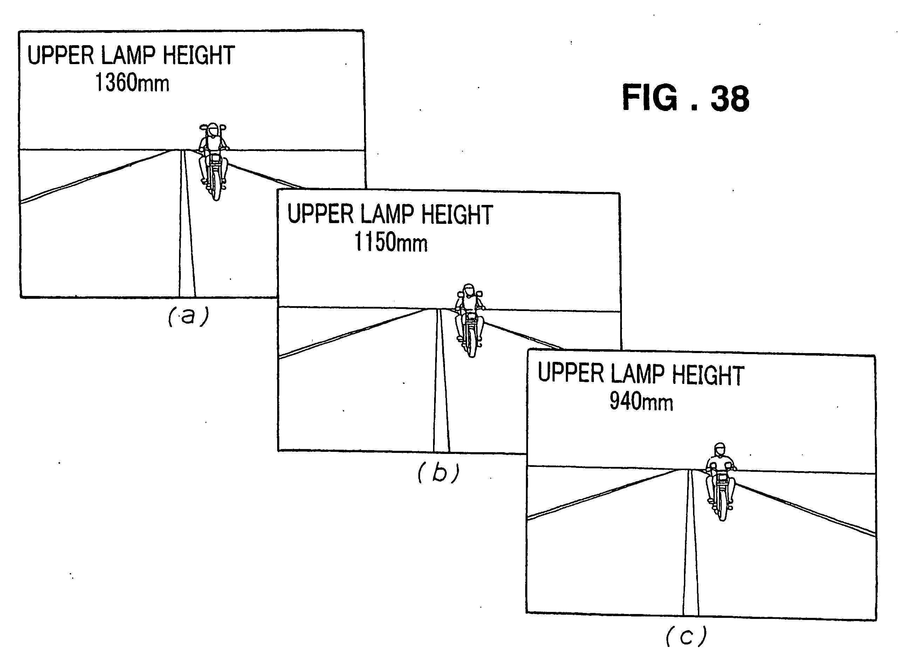

This experiment was carried out for two-wheelers with different lamp systems of the kind shown in Fig. 38. In Fig. 38, Fig. 38(a) shows a system in which the upper lamp height is 1360mm, Fig. 38(b) one in which the upper lamp height is 1150mm, and Fig. 38(c) one in which the upper lamp height is 940mm.

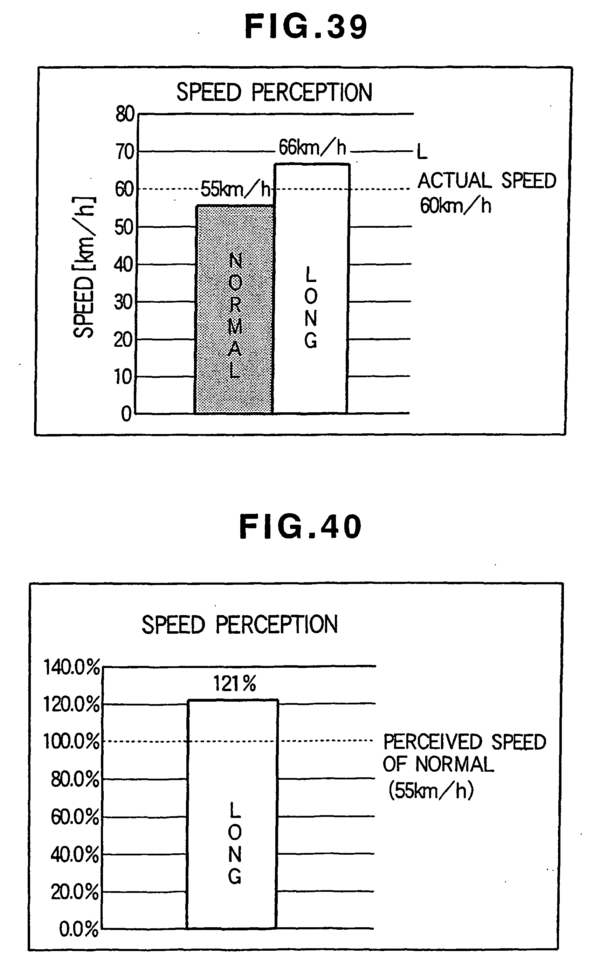

Fig. 39 shows respective perceived speeds of the two-wheelers of when the experiment was carried out with multiple observers watching multiple moving pictures of the kind represented by Figs. 35, 36 and 37. The two-wheeler in the moving picture used in the experiment is one of which the upper lamp height is 1370mm, the lower lamp height is 210mm and the height difference between the lamps is 1160mm. The vertical axis shows perceived speed, the bar graph (NORMAL) shows perceived speed of the ordinary two-wheeler, and the bar graph (LONG) shows perceived speed of a two-wheeler of the invention. The straight line L shows 60Km/h, which is the actual speed of the ordinary two-wheeler.

As can be seen from Fig. 39, the perceived speed with the ordinary two-wheeler (NORMAL) is slower, at 55Km/h, than the real speed, and the perceived speed with the two-wheeler (LONG) of the invention is faster, at 66Km/h, than the real speed.

Fig. 40 is a graph showing the results shown in Fig. 39 as a proportion with respect to the ordinary two-wheeler (NORMAL) of the perceived speed of the two-wheeler to which a measure according to the invention was applied (LONG). The vertical axis shows percentage, with the perceived speed of the ordinary two-wheeler taken as 100%. It can be seen that the two-wheeler of the invention seems 21% faster than the ordinary two-wheeler.

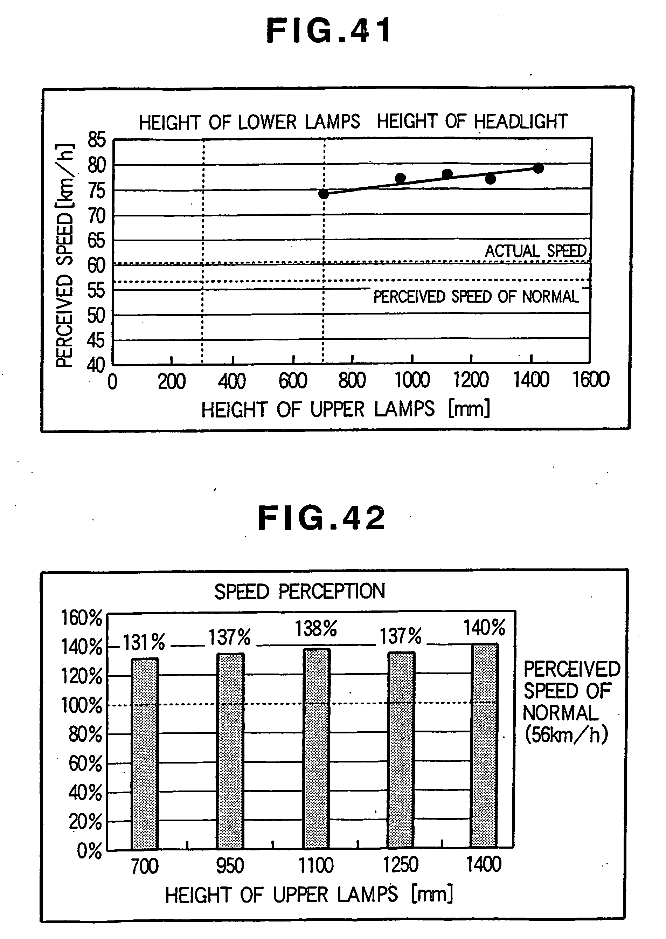

Fig. 41 shows the speed perceived by the observer when watching a two-wheeler approaching from.a position 60m away at a speed of 60Km/h. In the experiment, a moving picture of a two-wheeler with the lamp system shown in Fig. 32 was used. The vertical axis shows perceived speed and the horizontal axis shows the height of the upper lamps.

Whereas with the ordinary two-wheeler (NORMAL) the perceived speed was 56Km/h and slower than the real speed, with the two-wheelers to which a measure of the invention was applied (LONG), in the case of the two-wheeler having upper lamp height 700mm, lower lamp height 300mm (lamp height difference 400mm) the speed perceived by the observer was about 75Km/h, and in the case of the two-wheeler having upper lamp height 950mm, lower lamp height 300mm (lamp height difference 650mm) the speed perceived by the observer was about 77Km/h. In the case of the two-wheeler having upper lamp height 1100mm, lower lamp height 300mm (lamp height difference 800mm) the speed perceived by the observer was about 77Km/h, and in the case of the two-wheeler having upper lamp height 1250mm, lower lamp height 300mm (lamp height difference 950mm) the speed perceived by the observer was about 77Km/h. Also, in the case of the two-wheeler having upper lamp height 1400mm, lower lamp height 300mm (lamp height difference 1100mm) the speed perceived by the observer was about 79Km/h, and thus in all cases the speed was perceived to be faster than the real speed of 60Km/h.

Fig. 42 shows the results shown in Fig. 41 as a proportion with respect to the ordinary two-wheeler (NORMAL) of the perceived speed of the two-wheeler to which a measure according to the invention was applied (LONG). The vertical axis shows percentage, with the perceived speed of the ordinary two-wheeler taken as 100%, and the horizontal axis shows the height of the upper lamps. As shown in the figure, the two-wheeler to which a measure of the invention was applied (upper lamp height 700mm) seems 31% faster than the ordinary two-wheeler (NORMAL). The two-wheeler to which a measure of the invention was applied (upper lamp height 950mm) seems 37% faster than the ordinary two-wheeler (NORMAL). The two-wheeler to which a measure of the invention was applied (upper lamp height 1100mm) seems 38% faster than the ordinary two-wheeler (NORMAL). The two-wheeler to which a measure of the invention was applied (upper lamp height 1250mm) seems 37% faster than the ordinary two-wheeler (NORMAL). And the two-wheeler to which a measure of the invention was applied (upper lamp height 1400mm) seems 40% faster than the ordinary two-wheeler (NORMAL).

These experimental results can be interpreted to mean that because there is at least one lamp above the height of the headlight of the two-wheeler, as a result of a height difference being provided between the upper and lower lamps, others can perceive the speed of the two-wheeler more easily. And, it can be interpreted that because lamps have been provided at a height above the headlight, they are conspicuous, and consequently visibility has increased. Also, it can be interpreted that as a result of lamps being provided at a height above the headlight of the two-wheeler, the lamps disposed in a tall arrangement make the two-wheeler clearly look tall, and consequently it is easier for others to recognize the two-wheeler as such. And, it can be interpreted that this lamp system has increased the apparent size of the two-wheeler.

Next, the method and results of an experiment to show the effects on sense of distance perception accuracy of making the color of the lamps in a two-wheeler lamp system of the fourth embodiment the same color type as the headlight (fifth embodiment) and making them a different color type from the headlight will be discussed. The apparatus used in the experiment is the same apparatus as the apparatus shown in Fig. 13.

The experiment was carried out as follows. A computer graphics picture on the large screen 81 was first used to recreate a traffic environment and an ordinary two-wheeler approaching on a road 60m from the observer at 60Km/h. The moving picture of the traveling ordinary two-wheeler (NORMAL) was shown for 0.5 seconds, a 2.0 second blank was shown, and immediately after that a moving picture of a two-wheeler of the invention having lamps of one of different colors approaching at one of various speeds on a road 60m from the observer was shown for 0.5 seconds. These moving pictures were observed from a distance of 2m from the large screen 81 with the position of the eyes 1.15m from the floor. Then, by pushing the reaction button, the observer responds, as the result of the observation, with the two-wheeler which seemed to be moving the faster of the two two-wheelers.

Moving pictures in which the state of travel of the ordinary two-wheeler was made the same in every moving picture and the distance of the two-wheeler to which a measure according to the invention was applied was made the same but its speed and lamp color were varied were projected onto the large screen and the observer responded with the two-wheeler which seemed the faster using the reaction button. This experiment was carried out with multiple observers, and an equivalent value of psychological speed of when the distance from the observer of the two-wheeler to which a measure according to the invention was applied (LONG) was varied about that of the ordinary two-wheeler (NORMAL) were obtained for each color by a limit method and this equivalent value in each case was taken as a perceived speed for the respective color.

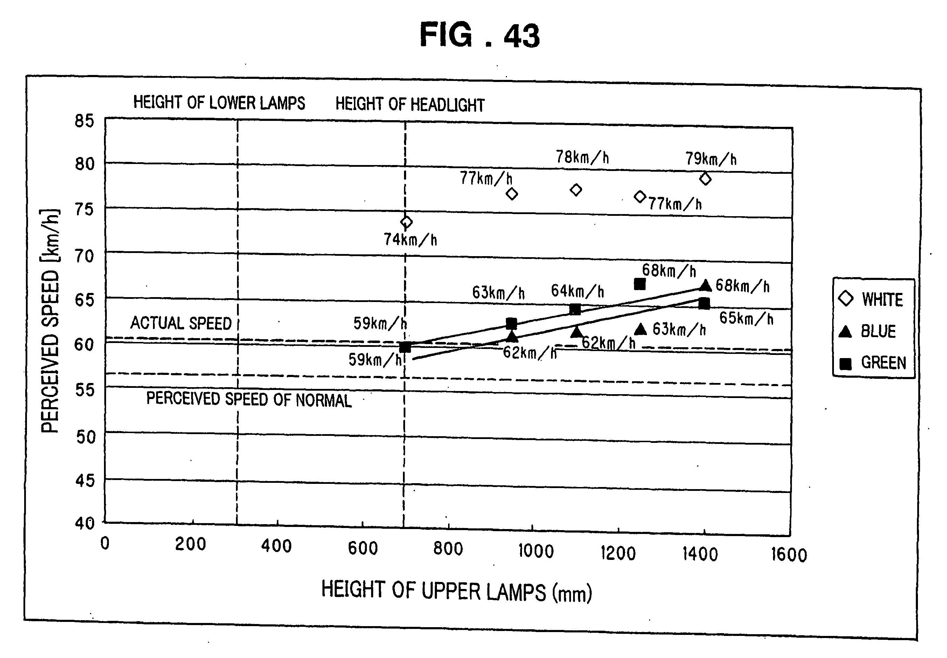

Fig. 43 shows the speed perceived by the observer when watching a two-wheeler approaching from a position 60m away at a speed of 60Km/h. In the experiment, a moving picture of a two-wheeler with the lamp system shown in Fig. 32 was used. The vertical axis shows perceived speed and the horizontal axis shows the height of the upper lamps.

Whereas with the ordinary two-wheeler (NORMAL) the perceived speed was 56Km/h and slower than the real speed, with the two-wheelers to which a measure of the invention was applied (LONG), when the lamps were of the same color type, in the case of the two-wheeler having upper lamp height 700mm, lower lamp height 300mm (lamp height difference 400mm) the speed perceived by the observer was about 75Km/h, and in the case of the two-wheeler having upper lamp height 950mm, lower lamp height 300mm (lamp height difference 650mm) the speed perceived by the observer was about 77Km/h. In the case of the two-wheeler having upper lamp height 1100mm, lower lamp height 300mm (lamp height difference 800mm) the speed perceived by the observer was about 77Km/h, and in the case of the two-wheeler having upper lamp height 1250mm, lower lamp height 300mm (lamp height difference 950mm) the speed perceived by the observer was about 77Km/h. Also, in the case of the two-wheeler having upper lamp height 1400mm, lower lamp height 300mm (lamp height difference 1100mm) the speed perceived by the observer was about 79Km/h, and thus in all cases the speed was perceived to be faster than the real speed of 60Km/h.

When the color of the lamps was green, which is a different color type from the headlight, in the case of the two-wheeler having upper lamp height 700mm, lower lamp height 300mm (lamp height difference 400mm) the speed perceived by the observer was about 59Km/h, and in the case of the two-wheeler having upper lamp height 950mm, lower lamp height 300mm (lamp height difference 650mm) the speed perceived by the observer was about 63Km/h. In the case of the two-wheeler having upper lamp height 1100mm, lower lamp height 300mm (lamp height difference 800mm) the speed perceived by the observer was about 64Km/h, and in the case of the two-wheeler having upper lamp height 1250mm, lower lamp height 300mm (lamp height difference 950mm) the speed perceived by the observer was about 68Km/h. Also, in the case of the two-wheeler having upper lamp height 1400mm, lower lamp height 300mm (lamp height difference 1100mm) the speed perceived by the observer was about 65Km/h, and thus in all cases the speed was perceived as a speed close to the real speed of 60Km/h.

When the color of the lamps was blue, which is a different color type from the headlight, in the case of the two-wheeler having upper lamp height 700mm, lower lamp height 300mm (lamp height difference 400mm) the speed perceived by the observer was about 59Km/h, and in the case of the two-wheeler having upper lamp height 950mm, lower lamp height 300mm (lamp height difference 650mm) the speed perceived by the observer was about 62Km/h. In the case of the two-wheeler having upper lamp height 1100mm, lower lamp height 300mm (lamp height difference 800mm) the speed perceived by the observer was about 62Km/h, and in the case of the two-wheeler having upper lamp height 1250mm, lower lamp height 300mm (lamp height difference 950mm) the speed perceived by the observer was about 63Km/h. Also, in the case of the two-wheeler having upper lamp height 1400mm, lower lamp height 300mm (lamp height difference 1100mm) the speed perceived by the observer was about 68Km/h, and thus in all cases the speed was perceived as a speed close to the real speed of 60Km/h.

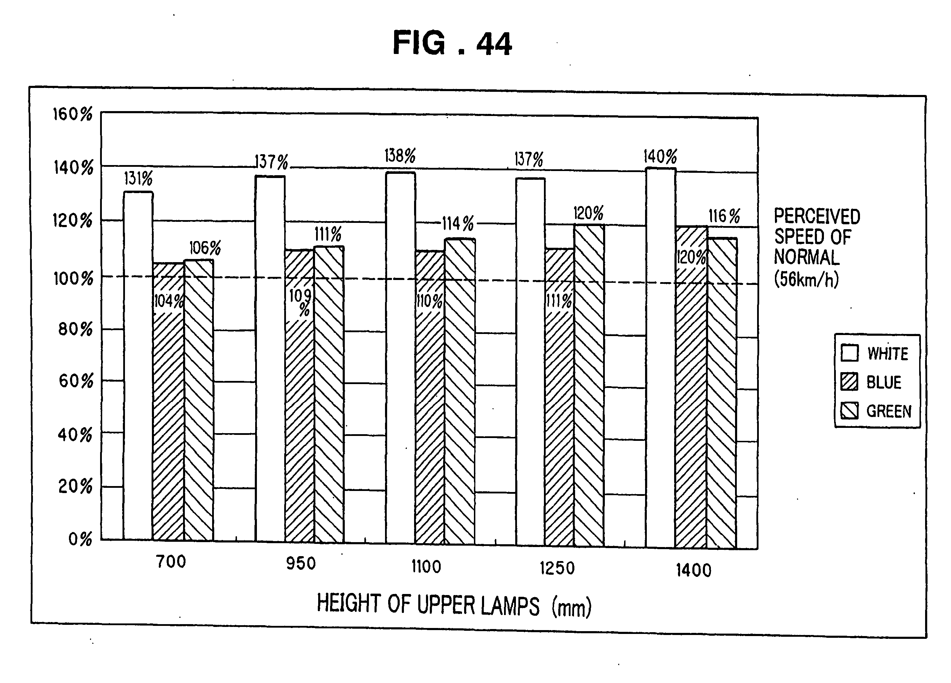

Fig. 44 shows the results shown in Fig. 43 as a proportion with respect to the ordinary two-wheeler (NORMAL) of the perceived speed of the two-wheeler to which a measure according to the invention was applied (LONG). The vertical axis shows percentage, with the perceived speed of the ordinary two-wheeler taken as 100%, and the horizontal axis shows the height of the upper lamps.

As shown in the figure, with the same color type, the two-wheeler to which a measure of the invention was applied (upper lamp height 700mm) seems 31% faster than the ordinary two-wheeler (NORMAL). With the different color type blue, the speed seems 4% faster, and with the different color type green the speed seems 6% faster.

With the same color type, the two-wheeler to which a measure of the invention was applied (upper lamp height 950mm) seems 37% faster than the ordinary two-wheeler (NORMAL). With the different color type blue, the speed seems 9% faster, and with the different color type green the speed seems 11% faster.

With the same color type, the two-wheeler to which a measure of the invention was applied (upper lamp height 1100mm) seems 38% faster than the ordinary two-wheeler (NORMAL). With the different color type blue, the speed seems 10% faster, and with the different color type green the speed seems 14% faster.

With the same color type, the two-wheeler to which a measure of the invention was applied (upper lamp height 1250mm) seems 37% faster than the ordinary two-wheeler (NORMAL). With the different color type blue, the speed seems 11% faster, and with the different color type green the speed seems 20% faster.

With the same color type, the two-wheeler to which a measure of the invention was applied (upper lamp height 1400mm) seems 40% faster than the ordinary two-wheeler (NORMAL). With the different color type blue, the speed seems 20% faster, and with the different color type green the speed seems 16% faster. Thus it can be seen that the speed seems the fastest with the same color type.

These experimental results can be interpreted to mean that because there is at least one lamp of the same color type as the headlight above the height of the headlight of the two-wheeler, as a result of a height difference being provided between the upper and lower lamps, others can perceive the speed of the two-wheeler more easily. It can be interpreted that because lamps have been provided at a height above the headlight, they are conspicuous, and consequently visibility has increased. Also, it can be interpreted that as a result of lamps being provided at a height above the headlight of the two-wheeler, the lamps disposed in a tall arrangement make the two-wheeler clearly look tall, and consequently it is easier for others to recognize the two-wheeler as such. And, it can be interpreted that this lamp system has increased the apparent size of the two-wheeler.

As a result of lamps of the same color type as the headlight being provided, the two-wheeler is made easier to recognize as a single body, and others can perceive its speed more easily.

Industrial Applicability

Thus, if lamps are provided near the axle center of the front wheel or near the axle center of the rear wheel, because these lamps are in a low position they are conspicuous, and it becomes easier for others to perceive the distance of the two-wheeler.

Also, if lamps are provided above the height of the headlight or the brake light, the apparent size of the two-wheeler can be increased, and it becomes easier for others to perceive the speed of the two-wheeler.

By making these lamps the same color type as the headlight, the effect can be further improved.

Overall it is possible to increase the visibility of a two-wheeler, and the invention is thus useful as a lamp system of a two-wheeler.

**Claims**

1.  A lamp system of a two-wheeler having a plurality of lamps wherein the plurality of lamps includes a headlight (16, 45, 60, 65, 90, 100, 110, 115) mounted above the front wheel (11, 41, 64, 69, 71, 76, 95, 104, 116) on the front of a head pipe (49) and a plurality of other lamps,
    **characterized in that** at least one (61, 62 , 66, 67, 68, 73, 74, 93, 101, 102 , 111, 112 , 117) of the other lamps is disposed on a straight line(L10, L15) passing through the axle center (19, 48) of the front wheel and parallel with the ground surface (G), or below the straight line (L10, L15), and on a vertical line(L11, L16) dropping to the ground surface (G) from the rearmost part of the front wheel, or forward of the vertical line(L11, L16), and wherein the at least one of those other lamps is of the same color type as the headlight .

2.  A lamp system of a two-wheeler according to claim 1,
    **characterized in that** at least one (50, 105, 106, 114) of these other lamps is disposed above the height of the headlight.

3.  A lamp system of a two-wheeler according to claim 1,
    **characterized in that** at least one (50, 105, 106, 114) of these other lamps is disposed above the height of the headlight and is of the same color type as the headlight.

4.  A lamp system of a two-wheeler according to claim 2 or 3,
    **characterized in that** the height difference between the uppermost lamp (16, 45, 60, 65, 90, 100, 110, 115; 50, 105, 106, 114) and the lowermost lamp(61, 62 , 66, 67 , 68, 73, 74, 93, 101, 102 , 111, 112 , 117) of the lamp system is at least 50% of the overall height of the two-wheeler.

5.  A lamp system of a two-wheeler having a plurality of lamps, wherein the plurality of lamps include a brake light (100a) mounted above the rear wheel behind the seat (14) and a plurality of other lamps,
    **characterized in that** at least one (77, 78) of the other lamps is disposed on a straight line(L10, L15) passing through the axle center of the rear wheel (12, 42) and parallel with the ground surface (G), or below the straight line (L10, L15), and on a vertical line (L12, L18) dropping to the ground surface (G) from the frontmost part of the rear wheel(12, 42), or rearward of the vertical line(L12, L13), and at least one of those other lamps (114) is disposed above the height of the brake light (100a).

6.  A lamp system of a two-wheeler according to claim 5,
    **characterized in that** the height difference between the uppermost rear lamp (114) and the lowermost lamp (77, 78) of the lamp system is at least 50% of the overall height of the two-wheeler.

**Patentansprüche**

1.  Lampensystem eines Zweirads mit einer Mehrzahl von Lampen, worin die Mehrzahl von Lampen einen Scheinwerfer (16, 45, 60, 65, 90, 100, 110, 115), der über dem Vorderrad (11, 41, 64, 69, 71, 76, 95, 104, 116) an der Vorderseite eines Kopfrohrs (49) angebracht ist, sowie eine Mehrzahl von anderen Lampen enthält,
    **dadurch gekennzeichnet, dass** zumindest eine (61, 62, 66, 67, 68, 73, 74, 93, 101, 102, 111, 112, 117) der anderen Lampen auf einer geraden Linie (L10, L15), die durch die Achsmitte (19, 48) des Vorderrads hindurchgeht und parallel zur Bodenoberfläche (G) ist, oder unterhalb der geraden Linie(L10, L15) und auf einer vertikalen Linie (L11, L16), die vom hintersten Teil des Vorderrads zur Bodenoberfläche (G) fällt, oder vor der vertikalen Linie (L11, L16) angeordnet ist, und worin zumindest eine dieser anderen Lampen vom gleichen Farbtyp wie der Scheinwerfer ist.

2.  Lampensystem eines Zweirads nach Anspruch 1, **dadurch gekennzeichnet, dass** zumindest eine (50, 105, 106, 114) dieser anderen Lampen über der Höhe des Scheinwerfers angeordnet ist.

3. Lampensystem eines Zweirads nach Anspruch 1, **dadurch gekennzeichnet, dass** zumindest eine (50, 105, 106, 114) dieser anderen Lampen über der Höhe des Scheinwerfers angeordnet ist und vom gleichen Farbtyp wie der Scheinwerfer ist.

4. Lampensystem eines Zweirads nach Anspruch 2 oder 3, **dadurch gekennzeichnet, dass** der Höhenunterschied zwischen der obersten Lampe (16, 45, 60, 65, 90, 100, 110, 115; 50, 105, 106, 114) und der untersten Lampe (61, 62, 66, 67, 68, 73, 74, 93, 101, 102, 111, 112, 117) des Lampensystems zumindest 50% der Gesamthöhe des Zweirads beträgt.

5. Lampensystem eines Zweirads mit einer Mehrzahl von Lampen, worin die Mehrzahl von Lampen eine Bremsleuchte (100a), die über dem Hinterrad hinter dem Sitz (14) angebracht ist, sowie eine Mehrzahl von anderen Lampen enthält, **dadurch gekennzeichnet, dass** zumindest eine (77, 78) der anderen Lampen auf einer geraden Linie (L10, L15), die durch die Achsmitte des Hinterrads (12, 42) hindurchgeht und parallel zur Bodenoberfläche (G) ist, oder unterhalb der geraden Linie (L10, L15) und auf einer vertikalen Linie (L12, L18), die vom vordersten Teil des Hinterrads (12, 42) zur Bodenoberfläche (G) fällt, oder hinter der vertikalen Linie (L12, L13) angeordnet ist, und zumindest eine dieser anderen Lampen (114) über der Höhe der Bremsleuchte (100a) angeordnet ist.

6. Lampensystem eines Zweirads nach Anspruch 5, **dadurch gekennzeichnet, dass** der Höhenunterschied zwischen der obersten hinteren Lampe (114) und der untersten Lampe (77, 78) des Lampensystems zumindest 50% der Gesamthöhe des Zweirads beträgt.

## Revendications

1. Système de lampe d'un véhicule à deux roues comportant une pluralité de lampes, dans lequel la pluralité de lampes inclut un phare (16, 45, 60, 65, 90, 100, 110, 115) monté au-dessus de la roue avant (11, 41, 64, 69, 71, 76, 95, 104, 116) sur l'avant d'un tube avant (49) et une pluralité d'autres lampes,
**caractérisé en ce qu'**au moins une (61, 62, 66, 67, 68, 73, 74, 93, 101, 102, 111, 112, 117) des autres lampes est disposée sur une droite (L10, L15) passant par l'axe (19, 48) de la roue avant et parallèle à la surface du sol (G), ou en dessous de la droite (L10, L15), et sur une ligne verticale (L11, L16) descendant vers la surface du sol (G) depuis la partie la plus arrière de la roue avant, ou vers l'avant de la ligne verticale (L11, L16) et dans lequel ladite au moins une de ces autres lampes est du même type de couleur que le phare.

2. Système de lampe d'un véhicule à deux roues selon la revendication 1,
**caractérisé en ce qu'**au moins une (50, 105, 106, 114) de ces autres lampes est disposée au-dessus de la hauteur du phare.

3. Système de lampe d'un véhicule à deux roues selon la revendication 1,
**caractérisé en ce qu'**au moins une (50, 105, 106, 114) de ces autres lampes est disposée au-dessus de la hauteur du phare et est du même type de couleur que le phare.

4. Système de lampe d'un véhicule à deux roues selon la revendication 2 ou 3,
**caractérisé en ce que** la différence de hauteur entre la lampe la plus haute (16, 45, 60, 65, 90, 100, 110, 115 ; 50, 105, 106, 114) et la lampe la plus basse (61, 62, 66, 67, 68, 73, 74, 93, 101, 102, 111, 112, 117) du système de lampe est de au moins 50 % de la hauteur globale du véhicule à deux roues.

5. Système de lampe d'un véhicule à deux roues comportant une pluralité de lampes, dans lequel la pluralité de lampes inclut un feu de freinage (100a) monté au-dessus de la roue arrière derrière le siège (14) et une pluralité d'autres lampes,
**caractérisé en ce qu'**au moins une (77, 78) des autres lampes est disposée sur une droite (L10, L15) passant par l'axe de la roue arrière (12, 42) et parallèle à la surface du sol (G), ou en dessous de la droite (L10, L15), et sur une ligne verticale (L12, L18) descendant vers la surface du sol (G) depuis la partie la plus avant de la roue arrière (12, 42), ou vers l'arrière de la ligne verticale (L12, L13) et au moins une de ces autres lampes (114) est disposée au-dessus de la hauteur du feu de freinage (100a).

6. Système de lampe d'un véhicule à deux roues selon la revendication 5,
**caractérisé en ce que** la différence de hauteur entre la lampe arrière la plus haute (114) et la lampe la plus basse (77, 78) du système de lampe est d'au moins 50 % de la hauteur globale du véhicule à deux roues.

FIG.1

10

L14
17
32, 33
31
12
29
L12
14
30
13
22
27, 28
25, 26
23, 24
16
21
20
18
L11
15
19
G
L10
11
L13

# FIG.2

# FIG.3

# FIG.4

EP 1 473 215 B1

FIG . 5

# FIG . 6

# FIG . 7

65

66

67

# FIG.8

# FIG.9

# FIG.10

# FIG.11

# FIG.12

**FIG.13**

EP 1 473 215 B1

# FIG . 14

200mm

90

700mm

(a)

90

91

(b)

EP 1 473 215 B1

FIG.15

(a)

(b)

FIG . 16

(a)

(b)

200mm

390mm

110mm

700mm

300mm

90

91

92

93

94

95

96

# FIG . 17

LOW  NORMAL

DISTANCE : 50m
SPEED    : 60km/h

DISTANCE : 80m
SPEED    : 60km/h

EP 1 473 215 B1

FIG . 18

LOW     NORMAL

DISTANCE : 80m
SPEED    : 60km/h

DISTANCE : 80m
SPEED    : 60km/h

# FIG .19

LOW     NORMAL

DISTANCE : 110m
SPEED     : 60km/h

DISTANCE : 80m
SPEED     : 60km/h

# FIG.20

**DISTANCE PERCEPTION**

# FIG.21

**DISTANCE PERCEPTION**

# FIG . 22

# FIG . 23

# FIG . 24

# FIG . 25

DISTANCE PERCEPTION

ACTUAL POSITION 80m

# FIG . 26

DISTANCE PERCEPTION

PERCEIVED
DISTANCE OF
NORMAL
(86m)

**FIG . 27**

106

114

100

100a

103

104

102

EP 1 473 215 B1

# FIG . 28

# FIG . 29

# FIG . 30

FIG . 31

310mm

122

123

125

126

90

124

93

92

390mm

110mm

1370mm

700mm

210mm

(a)

123

90

94

93

95

96

91

(b)

EP 1 473 215 B1

# FIG . 32

(b)

(a)

# FIG . 33

NORMAL

DISTANCE : 60m
SPEED : 60km/h

EP 1 473 215 B1

FIG . 34

# FIG . 35

LONG

DISTANCE : 60m
SPEED    : 85km/h

EP 1 473 215 B1

# FIG . 36

LONG

DISTANCE : 60m
SPEED    : 60km/h

# FIG . 37

LONG

DISTANCE : 60m
SPEED      : 35km/h

EP 1 473 215 B1

FIG . 38

**UPPER LAMP HEIGHT 1360mm**

(a)

**UPPER LAMP HEIGHT 1150mm**

(b)

**UPPER LAMP HEIGHT 940mm**

(c)

EP 1 473 215 B1

# FIG.39

SPEED PERCEPTION

66km/h ——— L

55km/h

ACTUAL SPEED
60km/h

SPEED [km/h]

NORMAL

LONG

# FIG.40

SPEED PERCEPTION

121%

PERCEIVED SPEED
OF NORMAL
(55km/h)

LONG

# FIG.41

HEIGHT OF LOWER LAMPS   HEIGHT OF HEADLIGHT

PERCEIVED SPEED [km/h] vs HEIGHT OF UPPER LAMPS [mm]

ACTUAL SPEED

PERCEIVED SPEED OF NORMAL

# FIG.42

SPEED PERCEPTION

131%   137%   138%   137%   140%

PERCEIVED SPEED OF NORMAL (56km/h)

HEIGHT OF UPPER LAMPS [mm]

# FIG . 43

EP 1 473 215 B1

## FIG . 44

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6227314 A
- JP 6344826 A
- JP 2001334976 A
- JP 4118329 A
- US 5457612 A

- DE 728262 C
- DE 713939 C
- US 4741598 A
- JP 6039691 A